(19) Europäisches Patentamt
European Patent Office
Office européen des brevets

(11) EP 1 821 299 A1

(12) **EUROPEAN PATENT APPLICATION**
published in accordance with Art. 158(3) EPC

(43) Date of publication:
**22.08.2007 Bulletin 2007/34**

(21) Application number: **05809558.9**

(22) Date of filing: **22.11.2005**

(51) Int Cl.:
***G11B 7/24*** *(2006.01)*

(86) International application number:
**PCT/JP2005/021483**

(87) International publication number:
**WO 2006/059516 (08.06.2006 Gazette 2006/23)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.12.2004 JP 2004352094**
**13.10.2005 JP 2005299292**

(71) Applicant: **FUJIFILM Corporation**
**Minato-ku**
**Tokyo 106-8620 (JP)**

(72) Inventor: **KAMADA, Kou,**
**c/o FUJIFILM Corporation**
**Fujinomiya-shi,**
**Shizuoka 4188666 (JP)**

(74) Representative: **HOFFMANN EITLE**
**Patent- und Rechtsanwälte**
**Arabellastrasse 4**
**81925 München (DE)**

(54) **OPTICAL RECORDING MEDIUM FILTER, OPTICAL RECORDING MEDIUM, ITS MANUFACTURING METHOD, OPTICAL RECORDING METHOD, AND OPTICAL REPRODUCING METHOD**

(57) It is an object to provide filters for optical recording media capable of preventing diffuse reflection of informing and reference lights from reflective films of optical recording media and inhibiting noise therefrom without shifting the selective reflection wavelength even when the incident angle is variable, optical recording media of hologram type having the filters and capable of recording images with higher density over the prior art, methods for producing the optical recording media with higher efficiency and lower cost, and also optical recording methods and optical reproducing methods that utilize the optical recording media. In order to attain the object, provided are filters for optical recording medium, comprising a colorant-containing layer, wherein the colorant-containing layer comprises at least one of pigments and dyes, and a cholesteric liquid crystal layer is disposed on the colorant-containing layer, and also optical recording media of hologram type comprising the filter.

FIG. 13

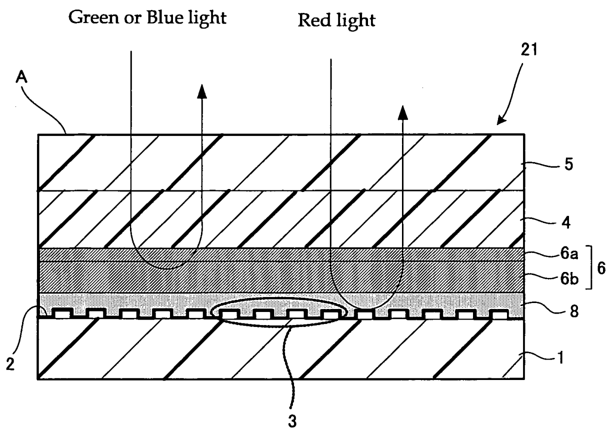


EP 1 821 299 A1

## Description

Technical Field

The present invention relates to filters for optical recording media, suited for wavelength-selective reflection films used in optical recording media of hologram type capable of recording images with higher density over the prior art; optical recording media having the filters; methods for producing the optical recording media; and optical recording or reproducing methods by use of the optical recording media.

Background Art

One type of recording media capable of recording large amounts of information e.g. high-density image data is optical recording media. The optical recording media have been commercially introduced, for example, in a form of rewritable optical recording media such as optical magnetic discs and phase change optical discs and in a form of recordable optical recording media such as CD-Rs. These optical recording media have been limitlessly demanded for their still larger capacity. However, all of optical recording media have conventionally been based on two-dimensional recording, which imposes a limit in a sense for increasing their recording capacity. Accordingly, optical recording media of hologram type capable of recording in three-dimensional fashion have been attracting attention in recent years.

The optical recording media of hologram type typically record information in a way that an informing light having a two-dimensional intensity distribution and a reference light having approximately the same intensity with the reference light are duplicated at inside of a photosensitive recording layer, thereby yielding a distribution of an optical property by use of an interference pattern formed by the lights. On the other hand, when recorded information is to be read or reproduced, only the reference light is irradiated onto the recording layer in the similar arrangement as at the recording, and the diffracted light having the intensity distribution corresponding to the optical property distribution formed inside the recording layer is emitted from the recording layer.

In the optical recording media of hologram type, the optical property distribution is three-dimensionally formed inside the recording layer, therefore, one region where information being recorded by an informing light and another region where information being recorded by another informing light can be partially overlapped, thus multiple recording can be realized. When digital volume holography is available, the original information can be reproduced exactly even if the overwriting decreases somewhat the signal/ noise ratio (S/N ratio) by virtue that the S/N ratio can be made remarkably higher at one spot. As a result, the multiple recording times may be extended into as long as several hundred times, and the recording capacity of optical recording media may be increased remarkably (see Patent Literature 1).

As for the optical recording media of hologram type, for example, an optical recording medium is proposed, as shown in FIG.1, that is provided with servo pit pattern 3 at the surface of lower substrate 1, reflective film 2 of aluminum etc. on the servo pit pattern, recording layer 4 on the reflective film, and upper substrate 5 on the recording layer (see Patent Literature 2).

However, there exists such a problem in the optical recording medium 20 having the construction shown in FIG.1 that the recording density decreases by half due to the construction of the servo zone and recording zone being divided in a plane.

Accordingly, the optical recording medium of Patent Literature 3 utilizes a circular light for the informing and reference lights, and is provided with a cholesteric liquid crystal layer or dichroic mirror layer as a filter layer between the recording layer and the reflective layer, and the recording layer and the servo layer are superimposed in the thickness direction. This proposal may bring about doubling of the recording density. In addition, when the cholesteric liquid-crystalline layer of monolayer is utilized as the filter layer that has the same rotating direction with the circular light of the informing light in the spiral configuration, the optical recording media can be mass-produced with higher productivity and lower cost, and also the filter effect may be proper at vertical incidence 0°. In this proposal, however, noise may be induced with change of incident angle, i.e. because incident light inclination of 10° or more tends to cause a shift into the selective reflection wavelength and thus the informing light and the reference lights reach the reflective film through the filter layer. This phenomenon leads to a problem that the optical recording media cannot be applied to conventional lens optical systems where the incident light passes through a diaphragm and exhibits an inclination of no less than $\pm 10°$.

In addition, filters based on cholesteric liquid crystal layers may be produced with low cost and adapted to mass-production. However, filters with cholesteric liquid crystal layers are likely to suffer from lower reflectance, e.g. 20% at lowest, of linear polarization or ordinary light under changes of recording systems and thus leak light increases correspondingly although the reflectance being sufficiently high for writing or reading light with 350 to 600 nm of circular polarization.

Here, it is estimated that a film based on dichroic mirror described above needs as much as 50 or more deposited layers in order to correspond with conventional optical lens systems, which resulting in a remarkably expensive optical recording medium.

Accordingly, optical recording media of hologram type, capable of preventing diffuse reflection of informing and reference lights from reflective films of optical recording media and inhibiting noise therefrom without shifting the selective reflection wavelength even when the incident angle is variable, have not been mass-produced yet with higher efficiency and lower cost, thus it is currently desired that such optical recording media can be produced promptly.

Patent Literature 1: Japanese Patent Application Laid-Open (JP-A) No. 2002-123949
Patent Literature 2: JP-A No. 11-311936
Patent Literature 3: JP-A No. 2004-265472

The present invention aims to provide filters for optical recording media capable of preventing diffuse reflection of informing and reference lights from reflective films of optical recording media and inhibiting noise therefrom without shifting the selective reflection wavelength even when the incident angle is variable, optical recording media of hologram type having the filters and capable of recording images with higher density over the prior art, methods for producing the optical recording media with higher efficiency and lower cost, and also optical recording methods and optical reproducing methods that utilize the optical recording media.

Disclosure of Invention

The inventive filer for optical recording medium comprises a colorant-containing layer that contains at least one of pigments and dyes and a cholesteric liquid crystal layer on the colorant-containing layer.
The inventive filter for optical recording medium can absorb a leak light (532 nm) transmitted through a filter, by virtue of the colorant-containing layer, transmit a servo light (655 nm), and prevent noise. The inventive filter can also eliminate angle-dependency of reflected irradiating light, by virtue of the cholesteric liquid crystal layer, without shifting the selective reflection wavelength even when the incident angle is variable.
It is preferred in the inventive filter for optical recording medium that the cholesteric liquid crystal layer comprises a nematic liquid-crystal compound and a photoreactive chiral compound; the photoreactive chiral compound comprises a chiral site and a photoreactive group, and the chiral site is at least one selected from isosorbide compounds, isomannide compounds, and binaphthol compounds; and/or the photoreactive group transforms from trans to cis form in its carbon-carbon double bond upon light irradiation.
The inventive filter for optical recording medium may lead to a filter for optical recording medium having a spiral pitch that successively changes in thickness direction of its liquid crystal layer by way of using the photoreactive chiral compound and adjusting the content of the photoreactive chiral compound and/or the period of UV irradiation.
It is preferred in the inventive filter for optical recording medium that the colorant is a red pigment, and the transmittance to the light of 532 nm is 33 % or less and the transmittance to the light of 655 nm is 66% or more by use of the red pigment.
By virtue of the colorant-containing layer, the inventive filter for optical recording medium may have the transmittance of 33% or less to the light of 532 nm and the transmittance of 66% or more to the light of 655 nm, and thus may absorb the leak light of 532 nm transmitted through the filter, transmit the servo light of 655 nm, and prevent noise.
It is preferred in the inventive filter for optical recording medium that the colorant-containing layer comprises a binder resin, the binder resin is a polyvinyl alcohol resin, and the surface of the colorant-containing layer is rubbing-treated.
By virtue of the rubbing treatment of the colorant-containing layer, the inventive filter for optical recording medium may act as an orientation film and also solve such a problem that the thickness of cholesteric liquid crystal layer itself is insufficient.
It is preferred in the inventive filter for optical recording medium that the cholesteric liquid crystal layer has a circular polarization-separating ability, the cholesteric liquid crystal layer is a monolayer; there are plural cholesteric liquid crystal layers, and their spiral rotation directions are the same each other, and/or their selective-reflection central wavelengths are different each other; the bandwidth of the selective reflection wavelength is 100 nm or more in the cholesteric liquid crystal layer; and/or the bands of the selective reflection wavelengths are successive in the cholesteric liquid crystal layer.
The inventive filter for optical recording medium may be far from shifting the selective reflection wavelength, even the incident angle being variable, and free from angle-dependency of reflected irradiating light and thus appropriately used for a wavelength-selective reflection film, by virtue that the cholesteric liquid crystal layer has a circular polarization-separating ability, their spiral rotation directions are the same each other, their central wavelengths are different each other, and the bands of the selective reflection wavelengths are successive.
It is preferred in the inventive filter for optical recording medium that a light having a first wavelength is transmitted, a light having a second wavelength different from the first wavelength is reflected, the first wavelength is 350 to 600 nm, and the second wavelength is 600 to 900 nm; the reflectance is 40% or more in a range of $\lambda_0$ to $\lambda_0$/cos20° ($\lambda_0$: wavelength of irradiating light), the reflectance is 40% or more in a range of $\lambda_0$ to $\lambda_0$/cos40° ($\lambda_0$ : wavelength of irradiating light), the

filter is utilized as a selective reflection film to record information on the basis of holography, and information is recorded on the optical recording medium by way that an informing light and a reference light are irradiated as a coaxial light beam, and the information is recorded by use of an interference pattern between the informing light and the reference light.

The inventive optical recording medium comprises an upper substrate, a lower substrate, a recording layer on the lower substrate that records information on the basis of holography, and a filter layer between the lower substrate and the recording layer; and the filter layer comprises a colorant-containing layer that contains at least one of pigments and dyes and a cholesteric liquid crystal layer on the colorant-containing layer.

The inventive optical recording medium, by virtue of the constitution described above, may be free from shifting the selective reflection wavelength even when the incident angle is variable, and prevent diffusion light caused by diffuse reflection from reflective surface since informing, reference, and reproducing lights do not reach the reflective film. Accordingly, no noise due to the diffusion light is overlapped with reproduction images nor detected at CMOS sensors or CCDs, thus reproduction images may be detected at least in an error-correctable level. The noise due to diffusion light is more problematic as the hologram multiplicity comes to larger. That is, when the hologram multiplicity comes to as large as 10, for example, the diffraction efficiency per hologram is lowered significantly, therefore, the presence of diffusion noise tends to make much difficult to detect reproduction images. The present invention, as described above, may solve the problem, and achieve higher density image recording over the prior art.

It is preferred in the inventive optical recording medium that the cholesteric liquid crystal layer comprises a nematic liquid-crystal compound and a photoreactive chiral compound; the photoreactive chiral compound comprises a chiral site and a photoreactive group, and the chiral site is at least one selected from isosorbide compounds, isomannide compounds, and binaphthol compounds; and/or the photoreactive group transforms from trans to cis form in its carbon-carbon double bond upon light irradiation.

The inventive optical recording medium may lead to an optical recording medium having a spiral pitch that successively changes in thickness direction of its liquid crystal layer, since the colorant-containing layer contains a photoreactive chiral compound that can significantly change the spiral pitch of liquid crystal with aid of light irradiation.

It is preferred in the inventive optical recording medium that the colorant is a red pigment, and the transmittance to the light of 532 nm is 33 % or less and the transmittance to the light of 655 nm is 66% or more using the red pigment.

By virtue of the colorant-containing layer, the inventive optical recording medium may have the transmittance of 33% or less to the light of 532 nm and the transmittance of 66% or more to the light of 655 nm, and thus may absorb the leak light of 532 nm transmitted through the filter, transmit the servo light of 655 nm, and prevent noise.

It is preferred in the inventive optical recording medium that the colorant-containing layer comprises a binder resin, the binder resin is a polyvinyl alcohol resin, and the surface of the colorant-containing layer is rubbing-treated.

By virtue of the rubbing treatment of the colorant-containing layer, the inventive optical recording medium may act as an orientation film and solve such a problem that the thickness of cholesteric liquid crystal layer itself is insufficient.

It is preferred in the inventive optical recording medium that the cholesteric liquid crystal layer has a circular polarization-separating ability, and the cholesteric liquid crystal layer is a monolayer; there are plural cholesteric liquid crystal layers, their spiral rotation directions are the same each other, and/or their selective-reflection central wavelengths are different each other; the bandwidth of the selective reflection wavelength is 100 nm or more in the cholesteric liquid crystal layer; and/or the bands of the selective reflection wavelengths are successive in the cholesteric liquid crystal layer.

The inventive optical recording medium may be far from shifting the selective reflection wavelength, even the incident angle being variable, and free from angle-dependency of reflected irradiating light and thus appropriately be used for a wavelength-selective reflection film, by virtue that the cholesteric liquid crystal layers of the filter layer have a circular polarization-separating ability, their spiral rotation directions are the same each other, their central wavelengths are different each other, and the bands of the selective reflection wavelengths are successive.

It is preferred in the inventive optical recording medium that a light having a first wavelength is transmitted, a light having a second wavelength different from the first wavelength is reflected, the first wavelength is 350 to 600 nm, and the second wavelength is 600 to 900 nm; the reflectance is 40% or more in a range of $\lambda_0$ to $\lambda_0/\cos 20°$ ($\lambda_0$: wavelength of irradiating light), the reflectance is 40% or more in a range of $\lambda_0$ to $\lambda_0/\cos 40°$ ($\lambda_0$: wavelength of irradiating light), the substrate has a servo pit pattern, a reflective film is provided on the servo pit pattern, and/or the reflective film is of metal.

It is preferred in the inventive optical recording medium that a first gap layer is provided between the filter layer and the reflective layer in order to smoothen the surface of the substrate. By virtue of the first gap layer between the filter layer and the reflective layer in the inventive optical recording medium, the reflective film may be protected and also the size of hologram formed on the recording layer may be adjusted.

It is preferred in the inventive optical recording medium that a second gap layer is provided between the recording layer and the filter layer. The second gap layer in the inventive recording medium may assure a point where the informing light and the reproducing light focus; that is, in cases that a photopolymer is filled into the region, excessive exposure tends to consume polymers excessively to decrease multiple-recording capacity, which may be effectively prevented by disposing the second gap that is non-reactive and transparent.

The inventive method for producing an optical recording medium, which may produce the inventive optical

recording medium described above, comprises a step of processing the inventive filter for optical recording medium into a shape of an optical recording medium, and a step of forming a filter layer by laminating the processed filter with the lower substrate.

In accordance with the inventive method for producing an optical recording medium, the filter for optical recording medium is processed into a shape of an optical recording medium and the processed filter is laminated with the lower substrate to form a filter layer, which therefore leading to mass-production of optical recording media with higher efficiency and lower cost compared to the prior art.

In the inventive optical recording method, an informing light and a reference light are irradiated as a coaxial light beam onto the inventive optical recording media, and the information is recorded on the recording layer by use of an interference pattern between the informing light and the reference light.

In accordance with the inventive optical recording method, a coaxial light beam of an informing light and a reference light is irradiated onto the inventive optical recording media, and an interference pattern between the informing light and the reference light records information on the recording layer, which therefore leading to higher density recording over the prior art.

The inventive optical reproducing method may reproduce information by way of irradiating a reference light onto the interference pattern on the recording layer recorded by the inventive optical recording method.

In accordance with the optical reproducing method, the interference pattern on the recording layer recorded by the inventive optical recording method can be effectively correctly read to thereby reproduce the high density recording information.

Brief Descriptions of Drawings

FIG.1 is a schematic cross section that exemplarily shows a configuration of a conventional optical recording medium.

FIG. 2 is a graph that shows a transmission spectrum of a red pigment.

FIG. 3 is a graph that shows a reflectance of a monolayer filter of cholesteric liquid crystal in terms of incident light from the normal direction (at 0°) of the filter.

FIG. 4 is a graph that shows a reflectance of a monolayer filter of cholesteric liquid crystal in terms of incident light from 40° inclined direction of the filter layer.

FIG. 5 is a graph that shows a reflectance of another monolayer filter of cholesteric liquid crystal in terms of incident light from the normal direction (at 0°) of the filter.

FIG. 6 is a graph that shows a reflectance of another monolayer filter of cholesteric liquid crystal in terms of incident light from 20° inclined direction of the filter layer.

FIG. 7 is a graph that shows a reflectance of a three-layer laminated filter of cholesteric liquid crystal in terms of incident light from the normal direction (at 0°) of the filter.

FIG. 8 is a graph that shows a reflectance of a three-layer laminated filter of cholesteric liquid crystal in terms of incident light from 40° inclined direction of the filter layer.

FIG. 9 is a graph that shows a reflectance of a two-layer laminated filter of cholesteric liquid crystal in terms of incident light from the normal direction (at 0°) of the filter.

FIG. 10 is a graph that shows a reflectance of a two-layer laminated filter of cholesteric liquid crystal in terms of incident light from 20° inclined direction of the filter layer.

FIG. 11 is a graph that shows a reflectance of a filter for optical recording medium in terms of incident light from the normal direction (at 0°) of the filter.

FIG. 12 is a graph that shows a reflectance of a filter for optical recording medium in terms of incident light from 20° inclined direction of the filter layer.

FIG. 13 is a schematic cross section that exemplarily shows an optical recording medium of the first embodiment according to the present invention.

FIG. 14 is a schematic cross section that exemplarily shows an optical recording medium of the second embodiment according to the present invention.

FIG. 15 is an explanatory view that shows exemplarily an optical system around an optical recording medium according to the present invention.

FIG. 16 is a block diagram that shows exemplarily an entire construction, mounted with an inventive optical recording medium, of an optical recording and reproducing apparatus according to the present invention.

Best Mode for Carrying Out the Invention

Filter for Optical Recording Medium

The inventive filer for optical recording medium comprises a colorant-containing layer, a cholesteric liquid crystal layer on the colorant-containing layer, a base material, and optional other layers as required.

Colorant-Containing Layer

The colorant-containing layer contains a colorant, a binder resin, a solvent, and other optional ingredients as required.

The colorant is preferably at least one of pigments and dyes; among these, red dyes and red pigments are preferable from the viewpoint of absorbing the light of 532 nm and transmitting the servo light of 655 nm; particularly preferable are the red pigments.

The red dye may be properly selected from conventional ones; examples thereof include acid dyes such as C.I. ACID RED 1, C.I. ACID RED 8, C.I. ACID RED 13, C.I. ACID RED 14, C.I. ACID RED 18, C.I. ACID RED 26, C.I. ACID RED 27, C.I. ACID RED 35, C.I. ACID RED 37, C.I. ACID RED 42, C.I. ACID RED 52, C.I. ACID RED 82, C.I. ACID RED 87, C.I. ACID RED 89, C.I. ACID RED 92, C.I. ACID RED 97, C.I. ACID RED 106, C.I. ACID RED 111, C.I. ACID RED 114, C.I. ACID RED 115, C.I. ACID RED 134, C.I. ACID RED 186, C.I. ACID RED 249, C.I. ACID RED 254 and C.I. ACID RED 289; basic dyes such as C.I. BASIC RED 2, C.I. BASIC RED 12, C.I. BASIC RED 13, C.I. BASIC RED 14, C.I. BASIC RED 15, C.I. BASIC RED 18, C.I. BASIC RED 22, C.I. BASIC RED 23, C.I. BASIC RED 24, C.I. BASIC RED 27, C.I. BASIC RED 29, C.I. BASIC RED 35, C.I. BASIC RED 36, C.I. BASIC RED 38, C.I. BASIC RED 39, C.I. BASIC RED 46, C.I. BASIC RED 49, C.I. BASIC RED 51, C.I. BASIC RED 52, C.I. BASIC RED 54, C.I. BASIC RED 59, C.I. BASIC RED 68, C.I. BASIC RED 69, C.I. BASIC RED 70, C.I. BASIC RED 73, C.I. BASIC RED 78, C.I. BASIC RED 82, C.I. BASIC RED 102, C.I. BASIC RED 104, C.I. BASIC RED 109 and C.I. BASIC RED 112; and reactive dyes such as C.I. Reactive Red 1, Reactive Red 14, Reactive Red 17, Reactive Red 25, Reactive Red 26, Reactive Red 32, Reactive Red 37, Reactive Red 44, Reactive Red 46, Reactive Red 55, Reactive Red 60, Reactive Red 66, Reactive Red 74, Reactive Red 79, Reactive Red 96 and Reactive Red 97. These may be used alone or in combination of two or more.

The red dye may be properly selected from conventional ones depending on the purpose; examples thereof include C.I. PIGMENT RED 9, C.I. PIGMENT RED 97, C.I. PIGMENT RED 122, C.I. PIGMENT RED 123, C.I. PIGMENT RED 149, C.I. PIGMENT RED 168, C.I. PIGMENT RED 177, C.I. PIGMENT RED 180, C.I. PIGMENT RED 192, C.I. PIGMENT RED 209, C.I. PIGMENT RED 215, C.I. PIGMENT RED 216, C.I. PIGMENT RED 217, C.I. PIGMENT RED 220, C.I. PIGMENT RED 223, C.I. PIGMENT RED 224, C.I. PIGMENT RED 226, C.I. PIGMENT RED 227, C.I. PIGMENT RED 228, C.I. PIGMENT RED 240, C.I. PIGMENT RED 48:1, Permanent Carmine FBB (C.I. PIGMENT RED 146), Permanent Ruby FBH (C.I. PIGMENT RED 11), Fastel Pink B sputa (C.I. PIGMENT RED 81). These may be used alone or in combination of two or more.

Among these, such red pigments are preferably used in particular that exhibit a light transmission spectrum of 10% or less to the light of 532 nm and 90% or more to the light of 655 nm, as shown in FIG. 2.

The content of the colorant is preferably 0.05% by mass to 90% by mass based on the total solid mass in the colorant-containing layer, more preferably 0.1 to 70% by mass. When the content is less than 0.05% by mass, the colorant-containing layer may be necessary to be as thick as 500 μm or more, and when the content is more than 90% by mass, the colorant-containing layer may lose self-stability, and the film may collapse while producing the colorant-containing layer.

Binder Resin

The binder resin may be properly selected from conventional ones depending on the purpose; examples thereof include polyvinylalcohol resins; vinylchloride-vinylacetate copolymers; copolymers of vinylchloride and/or vinyl acetate and at least one selected from vinyl alcohols, maleic acid, and acrylic acid; vinylchloride-vinilidenechloride copolymers; vinylchloride-acrylonitrile copolymers; ethylene-vinylacetate copolymers; cellulose derivatives such as nitrocellulose resins; polyacrylic resins; polyvinylacetal resins; polyvinylbutyral resins; epoxy resins; phenoxy resins; polyurethane resins and polycarbonate resins. These may be use alone or in combination of two or more.

To further improve the dispersibility and durability, a polar group(s) is preferably introduced into molecules of the binder resin. Examples of the polar group are an epoxy group, $-CO_2H$, -OH, $-NH_2$, $-SO_3M$, $-OSO_3M$, $-PO_3M_2$, $-OPO_3M_2$ and the like, provided that M is at least any one of hydrogen atom, alkali metals and ammonium. Moreover, in cases where plural Ms are present in the one polar group, such Ms may be mutually different. The content of the polar group is preferably $10^{-6}$ equivalence to $10^{-4}$ equivalence per gram of the binder resin.

The binder resins are preferably hardened by adding a crosslinking agent selected from conventional isocyanate compounds etc.

The content of the binder resin is preferably 10 % by mass to 99.95 % by mass based on the total solid mass in the colorant-containing layer, more preferably 30 % by mass to 99.9% by mass.

The respective components are dissolved or dispersed into a suitable solvent to prepare a coating liquid, then the coating liquid is coated on a base material described later by desirable coating processes, thereby the colorant-containing layer may be formed.

The solvent may be properly selected from conventional ones depending on the purpose; examples thereof include water; alkoxypropionic acid esters such as 3-methoxypropionic acid methylester, 3-methoxypropionic acid ethylester, 3-methoxypropionic acid propylester, 3-ethoxypropionic acid methylester, 3-ethoxypropionic acid ethylester and 3-ethoxypropionic acid propylester; alkoxy alcohol esters such as 2-methoxypropylacetate, 2-ethoxypropylacetate and 3-methoxybutylacetate; lactic acid esters such as methyl lactate and ethyl lactate; ketones such as methyl ethyl ketone, cyclohexanone and methylcyclohexanone; γ-butyrolactone; N-methylpyrrolidone; dimethylsulfoxide; chloroform; and tetrahydrofuran. These solvents may be used alone or in combination of two or more.

The coating process may be properly selected depending on the purpose; examples thereof include inkjet processes, spin coating processes, kneader coating processes, bar coating processes, blade coating processes, casting processes, dipping processes, and curtain coating processes.

The thickness of the colorant-containing layer is preferably 0.5 μm to 200 μm, more preferably 1.0 μm to 100 μm. When the thickness is less than 0.5 μm, the binder resin for enclosing the colorant to form a film may be impossible to include in a sufficient content, when it is more than 200 μm, the excessively thick filter may require excessively large optical systems for irradiating light and servo light.

It is preferred that the surface of the colorant-containing layer is rubbing-treated thereby the colorant-containing layer may act as an orientation film and also such a problem may be solved that the thickness of cholesteric liquid crystal layer itself is insufficient.

The rubbing treatment may be carried out by conventional processes; for example, a roller wound with a fabric is rotated on the colorant-containing layer formed on the base material.

Cholesteric Liquid Crystal Layer

The cholesteric liquid crystal layer contains at least a nematic liquid crystal compound and a chiral compound, and also contains a polymerizable monomer and other optional components as required.

The cholesteric liquid crystal layer may be of (1) monolayer of cholesteric liquid crystal layer or (2) multi-layer of two or more cholesteric liquid crystal layers.

Preferably, the cholesteric liquid crystal layer may display a circular-polarization separating function. Cholesteric liquid crystal layers, having a circular-polarization separating function, may exhibit a selective reflectivity that such a light of circular polarization component is solely reflected in which the helical-rotation direction of liquid crystal is the same as the direction of circular polarization and the wavelength coincide with the helical pitch. The selective reflectivity of the cholesteric liquid crystal layer is made use so as to transmit and separate a circular polarization with a specific wavelength from natural light with a certain wavelength band and the residual lights are reflected.

Accordingly, it is preferred that the cholesteric liquid crystal layer transmits the light of the first wavelength and reflects the circular polarization of the second wavelength, and the first wavelength is 350 nm to 600 nm and the second wavelength is 600 nm to 900 nm.

The cholesteric liquid crystal layer may typically exhibit the selective reflectivity for a certain wavelength region rather than for wavelengths of the entire visible lights. That is, the wavelength width Δλ of the selective reflection region may be expressed by the Equation (1) below.

$$\Delta\lambda = 2\lambda(ne - no)/(ne + no) \quad : \text{Equation (1)}$$

in which "no" represents the refractive index of the nematic liquid crystal molecules for normal light, contained in the cholesteric liquid crystal layer, "ne" represents the refractive index of the nematic liquid crystal molecules for abnormal light, and λ represents the central wavelength of light selectively reflected.

As expressed by the Equation (1), the wavelength width Δλ of the selective reflection region depends on the molecular configuration itself of the nematic liquid crystal. It is understood from the Equation (1) that larger (ne - no) may extend the bandwidth Δλ ; however, (ne - no) is typically 0.3 or less, and the value higher than 0.3 may make difficult the practical application since the other functions as liquid crystals such as orientation characteristic and liquid crystal temperature are likely to be insufficient.

The central wavelength λ of selective reflection in the cholesteric liquid crystal layer may be expressed by the Equation (2) below.

$$\lambda = (ne + no)P/2 \quad : \text{Equation (2)}$$

in which "ne" and "no" represent the same meanings with those in the Equation (1); "P" represents a helix pitch length corresponding to one rotational torsion of the cholesteric liquid crystal layer.

As shown in Equation (2), the central wavelength λ of selective reflection depends on the average refractive index of the cholesteric liquid crystal layer and the helix pitch length P, when the helix pitch of the cholesteric liquid crystal layer being constant. In order to enhance the selective reflectivity of the cholesteric liquid crystal layer, it is therefore preferred that each of the cholesteric liquid crystal layers represents different central wavelengths in terms of the selective reflectivity each other and also that the helical rotation directions (right or left) are the same for the respective cholesteric liquid crystal layers. It is also preferred that the regions of selective reflection wavelength are successive with respect to the respective cholesteric liquid crystal layers. The term "successive" as used herein means that there exists no gap in a wavelength region of $\lambda_0$ to $\lambda_0$/cos20°, preferably $\lambda_0$ to $\lambda_0$/cos40°, and the wavelength region represents substantially a reflective index of 40% or more.

Accordingly, it is preferred that the distance between the central wavelength λ of selective reflections is such that each of the regions of selective reflection wavelength is successive with at least one of other regions of selective reflection wavelength.

The filter for optical recording medium preferably has an optical reflectivity of 40% or more for a wavelength range of $\lambda_0$ to $\lambda_0$/cos20° ($\lambda_0$: wavelength of irradiating light) incident at an angle of ±20°; particularly preferably, the filter layer for optical recording media has an optical reflectivity of 40% or more for a wavelength range of $\lambda_0$ to $\lambda_0$/cos40° ($\lambda_0$: wavelength of irradiating light) incident at an angle of ±40°. When the optical reflectivity is 40% or more for a wavelength range of $\lambda_0$ to $\lambda_0$/cos20°, especially $\lambda_0$ to $\lambda_0$/cos40° ($\lambda_0$: wavelength of irradiating light), the angle dependency to reflect the irradiating light may be eliminated and thus conventional optical lens systems for usual optical recording media may be employed.

Specifically, (1) in cases of a monolayer of cholesteric liquid crystal layer, the filter for optical recording medium having a spiral pitch that successively changes in thickness direction of its liquid crystal layer may be produced by use of a photoreactive chiral compound that can significantly change the spiral pitch of liquid crystal with aid of light irradiation and by way of adjusting the content of the photoreactive chiral compound and/or the period of UV irradiation. FIG. 3 shows that the reflectivity of the normal incident light from front side (0°) is 40% or more. On the other hand, as the direction of the incident light being inclined, a shift toward shorter wavelength develops gradually; FIG. 4 shows the reflectivity at the angle 40° inclined in the liquid crystal layer.

Similarly, a filter for optical recording medium may be produced that has the reflective property as shown in FIG. 5 by way of adjusting the content of the photoreactive chiral compound and/or the period of UV irradiation and thereby causing a successive change of the spiral pitch in thickness direction of its liquid crystal layer. FIG. 5 shows that the reflectivity of the normal incident light from front side (0°) is 40% or more. On the other hand, as the direction of the incident light being inclined, a shift toward shorter wavelength develops gradually; FIG. 6 shows the reflectivity at the angle 20° inclined in the liquid crystal layer.

With respect to the reflection range of $\lambda_0$ to 1.3$\lambda_0$ shown in FIG. 3, 1.3$\lambda_0$ equals to 692 nm when $\lambda_0$ is 532 nm, and thus a servo light of wavelength 655 nm is undesirably reflected. This range of $\lambda_0$ to 1.3$\lambda_0$ is adapted to incident light of ±40° in the filter layer. In cases where such largely inclined incident light is to be used, a servo operation can be employed favorably by using a masked servo light at an incident angle within ±20°. It is also easy to cover a servo light incident to the filter layer at an angle within ±20° by securing larger helical pitch in the cholesteric liquid crystal layer of the filter layer. In that case, it is only necessary to prepare a laminate of two cholesteric liquid crystal layers with a reflection range of $\lambda_0$ to 1.1$\lambda_0$ as shown in FIG. 5. Thus, transmittance of the servo light entails substantially no difficulty.

Accordingly, the results shown in FIGs. 3 to 6 may assure the reflectivity of 40% or more even when the incident wavelength being inclined 0° to 20°, preferably 0° to 40°, in the filter for optical recording media according to the present invention, thus filter layers may be produced substantially with no problems for reading signals.

It is preferred that the bandwidth of the selective reflection wavelength of the monolayer of cholesteric liquid crystal layer is 100 nm or more, more preferably 150 to 300 nm. In cases where the bandwidth is less than 100 nm, the reflective property may be insufficient for the incident light within ±20°.

In addition, (2) in cases of a multi-layer of cholesteric liquid crystal layers, a filter for optical recording medium may be produced that has the reflective property as shown in FIG. 7 by way of laminating three cholesteric liquid crystal layers of which the central wavelengths of selective reflectivity are different each other and the helical rotation directions of the respective cholesteric liquid crystal layers are the same each other. FIG. 7 shows that the reflectivity of the normal

incident light from front side (0°) is 40% or more. On the other hand, as the direction of the incident light being inclined, a shift toward shorter wavelength develops gradually; FIG. 8 shows the reflectivity at the angle 40° inclined in the liquid crystal layer.

Similarly, a filter for optical recording medium may be produced that has the reflective property as shown in FIG. 9 by way of laminating two cholesteric liquid crystal layers of which the central wavelengths of selective reflectivity are different each other and the helical rotation directions of the respective cholesteric liquid crystal layers are the same each other. FIG. 9 shows that the reflectivity of the normal incident light from front side (0°) is 40% or more. On the other hand, as the direction of the incident light being inclined, a shift toward shorter wavelength develops gradually; FIG. 10 shows the reflectivity at the angle 20° inclined in the liquid crystal layer.

With respect to the reflection range of $\lambda_0$ to $1.3\lambda_0$ shown in FIG. 7,$1.3\lambda_0$ equals to 692 nm when $\lambda_0$ is 532 nm, and thus a servo light of wavelength 655 nm is undesirably reflected. This range of $\lambda_0$ to $1.3\lambda_0$ is adapted to incident light of ±40° in the filter for optical recording medium. In cases where such largely inclined incident light is to be used, a servo operation can be employed favorably by using a masked servo light at an incident angle within ±20°. It is also easy to cover a light incident to the filter for optical recording medium at an angle within ±20° by securing a large average refractive index in the cholesteric liquid crystal layer of the filter layer. In that case, it is only necessary to prepare a laminate of two cholesteric liquid crystal layers with a reflection range of $\lambda_0$ to $1.1\lambda_0$ as shown in FIG. 9. Thus, transmittance of the servo light entails substantially no difficulty.

Accordingly, the results shown in FIGs. 7 to 10 may assure the reflectivity of 40% or more even when the incident wavelength being inclined 0° to 20°, preferably 0° to 40°, in the filter for optical recording medium, a filter for optical recording medium may be produced with substantially no problems for reading signals.

The respective cholesteric liquid crystal layer may be properly selected depending on the purpose as long as satisfying the properties described above; the cholesteric liquid crystal layer contains a nematic liquid crystal compound, a chiral compound, and also a polymerizable monomer and other components as required.

Nematic Liquid Crystal Compound

The nematic liquid crystal compound features that their liquid crystal phase solidifies under their liquid crystal transition temperatures, and may be properly selected from liquid crystal compounds, high-molecular liquid crystal compounds, and polymerizable liquid crystal compounds, all of which have refractive index anisotropy $\Delta n$ of 0.10 to 0.40. For example, molecules of such nematic liquid crystal compounds in a liquid crystal state may be aligned on a substrate treated for the alignment such as rubbing, followed by cooling to immobilize the molecules for an available solid phase.

The nematic liquid crystal compound may be properly selected depending on the purpose; for example, the following compounds are available.

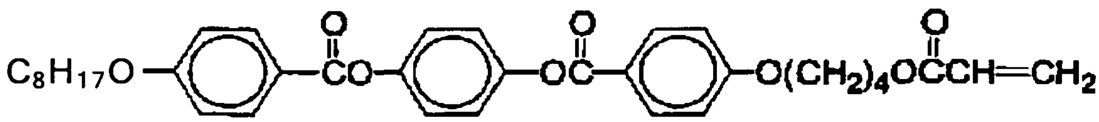

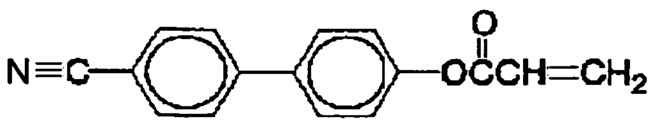

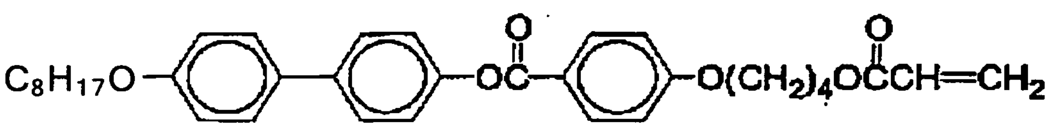

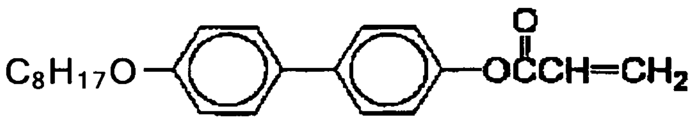

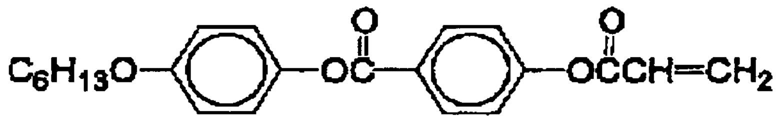

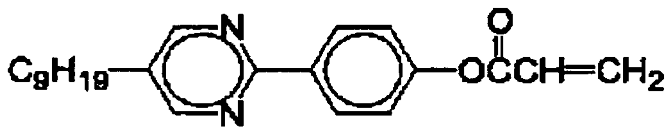

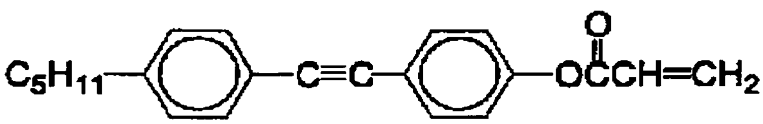

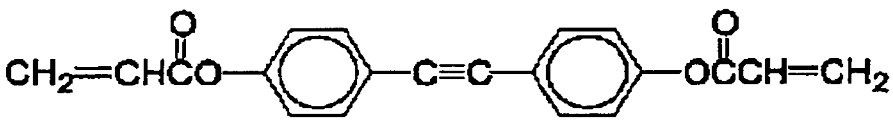

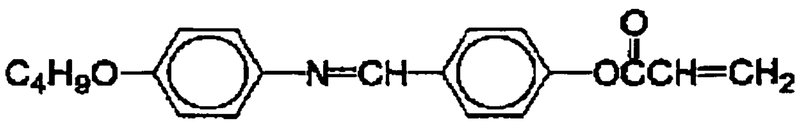

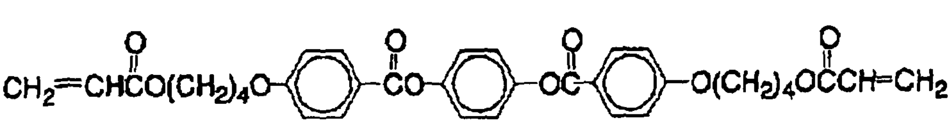

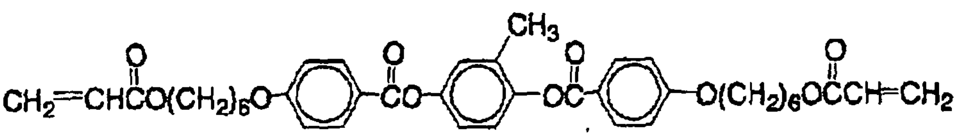

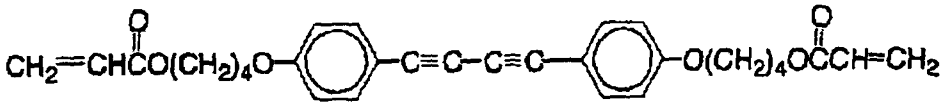

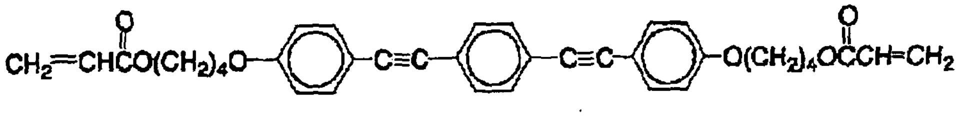

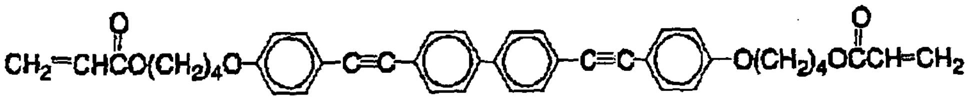

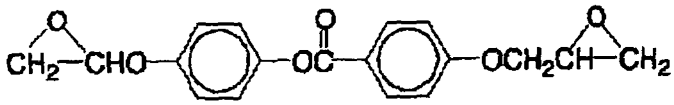

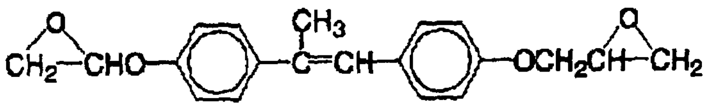

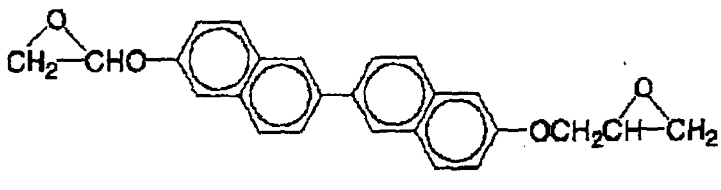

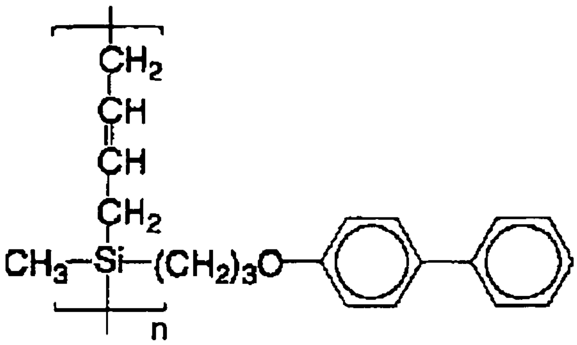

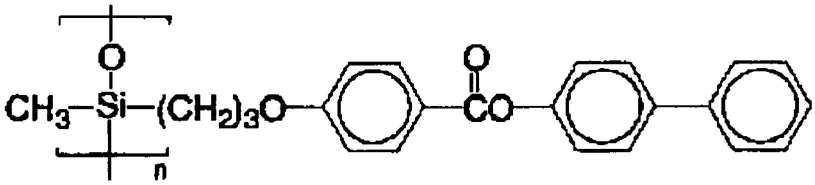

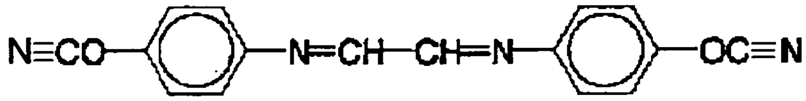

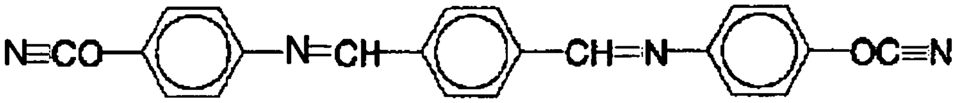

In the equations described above, "n" represents an integer of 1 to 1000. In addition, each of the compounds exemplified above may be properly substituted for the groups connected at the side chains into those of the following structures.

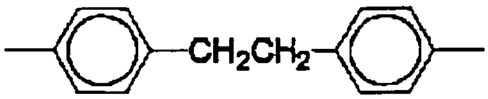

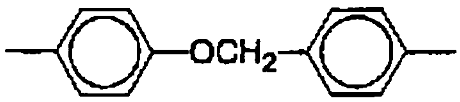

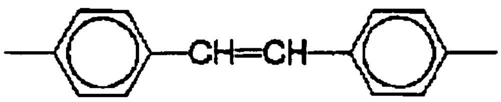

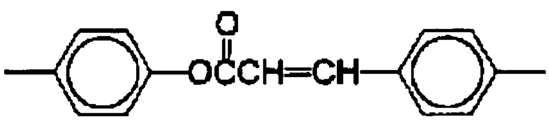

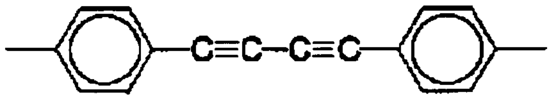

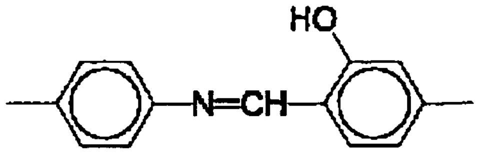

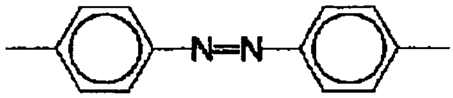

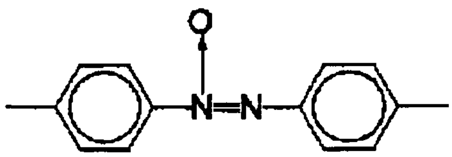

Among the exemplified compounds, the nematic liquid crystal compounds are preferably those having at least a polymerizable group per molecule from the view point of assuring sufficient curing ability. Among these, ultraviolet (UV) polymerizable liquid crystal compounds are preferable. Such UV polymerizable liquid crystal compounds are commercially available; examples thereof include PALIOCOLOR LC242 (product name, by BASF Corp.), E7 (product name, by Merck Ltd.), LC-Silicon-CC3767 (product name, by Wacker-Chem), and L35, L42, L55, L59, L63, L79 and L83 (product name, by Takasago International Corp.).

The content of the nematic liquid crystal compound is preferably 30% by mass to 99% by mass, more preferably 50% by mass to 99% by mass base of the total solid mass of each of the cholesteric liquid crystal layers. When the content of the nematic liquid crystal compound is less than 30% by mass, the alignment of nematic liquid crystal molecules may be insufficient.

Chiral Compound

The chiral compound may be properly selected from conventional ones depending on the purpose, in cases of (2) a multi-layer of cholesteric liquid crystal layers; examples thereof include isomannide compounds, catechine compounds, isosorbide compounds, fenchone compounds, and carvone compounds in view of the hues of the liquid crystal compounds and for enhanced color purity. These compounds may be used alone or in combination of two or more.

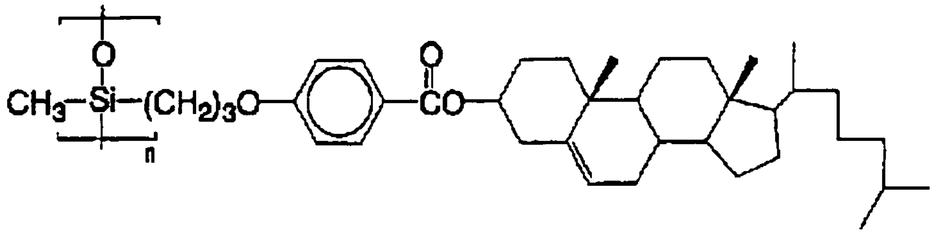

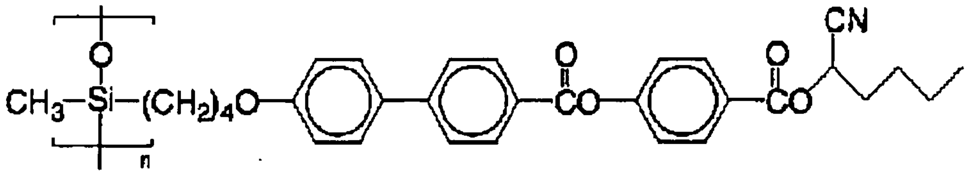

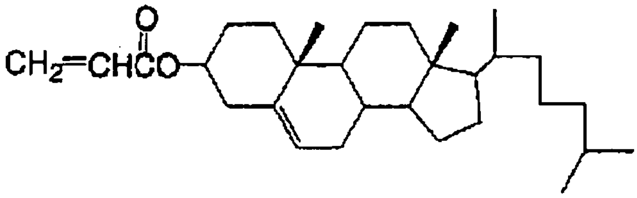

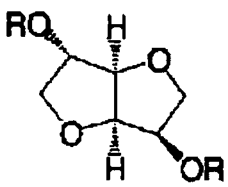

R =

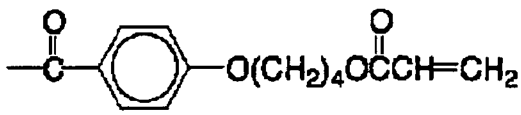

left twist

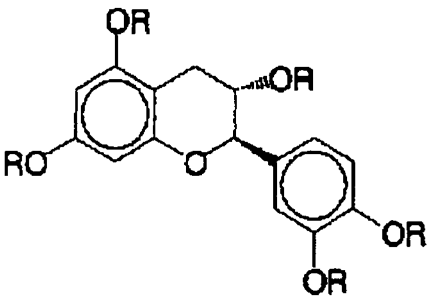

R =

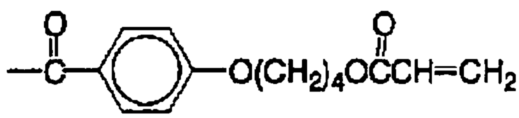

left twist

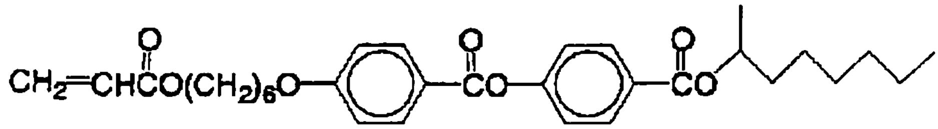

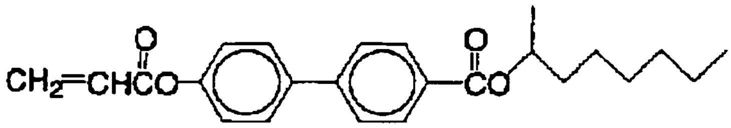

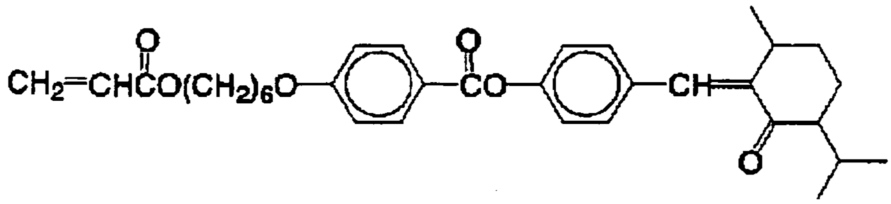

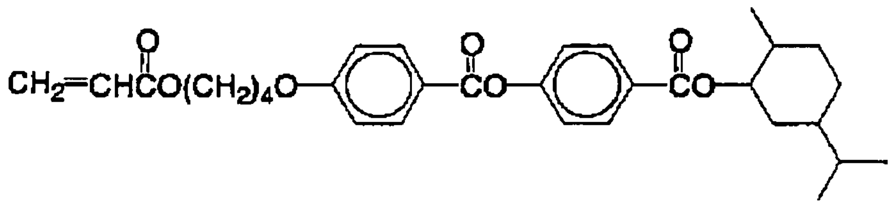

In addition, commercially available chiral compounds may be used; examples thereof include S101, R811 and CB15 (product name, by Merck Ltd.); and PALIOCOLOR LC756 (product name, by BASF Corp.).

It is preferred in cases of (2) a multi-layer of cholesteric liquid crystal layers that the content of the chiral compound in each liquid crystal layer is preferably 0 to 30% by mass, more preferably 0 to 20% by mass based on the total solid mass of the respective liquid crystal layers. When the content of the chiral compound is more than 30% by mass, the alignment may be insufficient in the cholesteric liquid crystal layer.

On the other hand, (1) in cases of a monolayer of cholesteric liquid crystal layer, photoreactive chiral compounds are favorably employed whose helical pitch can be largely altered with aid of light irradiation.

The photoreactive chiral compound means a chiral compound that has a photosensitivity, whose helical pitch can be largely altered by light irradiation.

The photoreactive chiral compound has a chiral site and a photoreactive group, wherein the chiral site is preferably at least one selected from isosorbide compounds, isomannide compounds and binaphthol compounds.

The photoreactive group is preferably a group that undergoes trans-cis isomerization of a carbon-carbon double bond upon light irradiation.

The isosorbide compound may be appropriately selected depending on the purpose; examples thereof are those disclosed in Japanese Patent Application Laid-Open (JP-A) Nos. 2002-80851, 2002-179681, 2002-179682, 2002-338575, 2002-338668, 2003-306490, 2003-306491, 2003-313187, 2003-313292 and 2003-313189.

The isomannide compound may be appropriately selected depending on the purpose; examples thereof include those disclosed in Japanese Patent Application Laid-Open (JP-A) Nos. 2002-80478 and 2003-313188.

The binaphthol compound may be appropriately selected depending on the purpose; examples thereof include

those disclosed in Japanese Patent Application Laid-Open (JP-A) Nos. 2002-302487, 2002-179670 and 2002-179669.

The photoreactive chiral compounds are exemplified by those shown below.

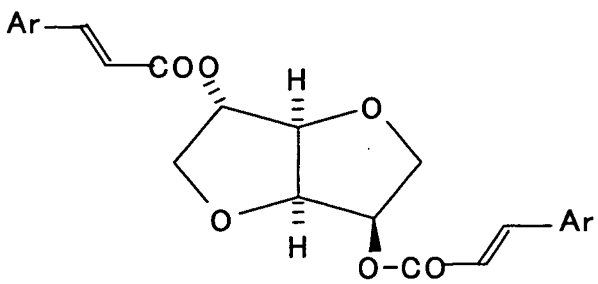

Ar: moiety expressed by one of (1) to (6)

(1) 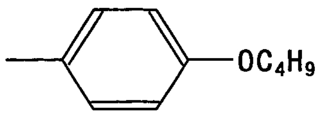

(2) 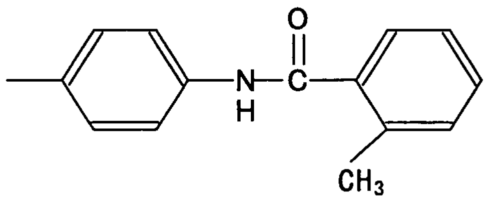

(3) 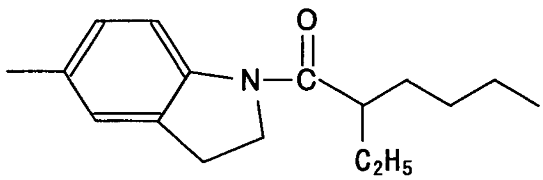

(4) 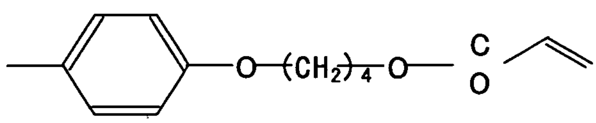

(5) 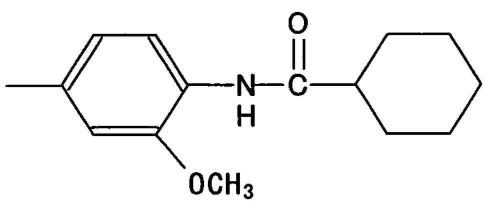

(6) 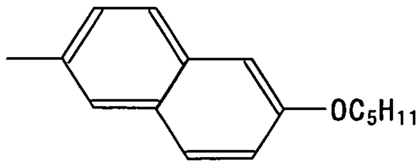

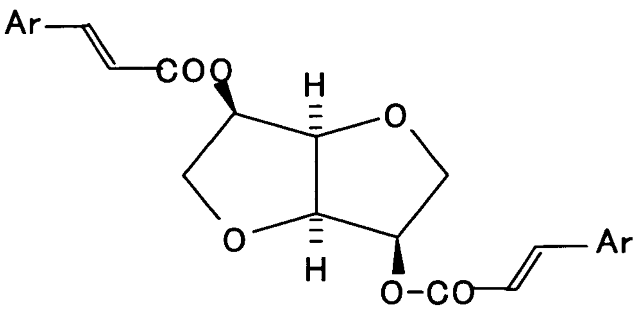

Ar: moiety expressed by one of (7) to (12)

(7) 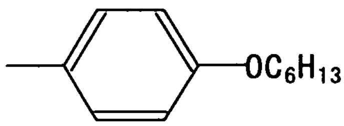

(8) 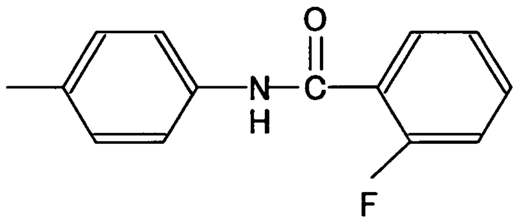

(9) 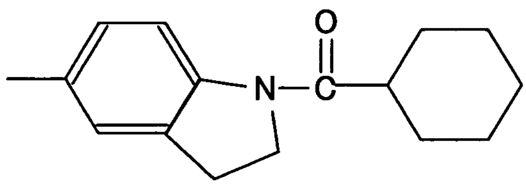

(10) 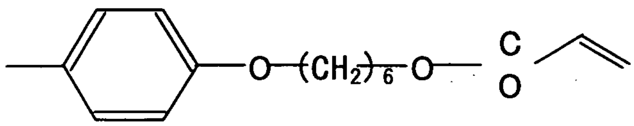

(11) 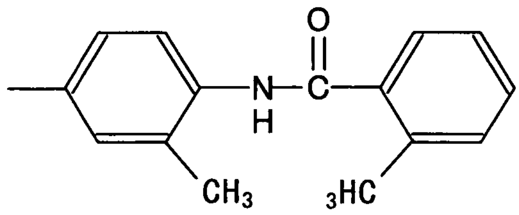

(12) 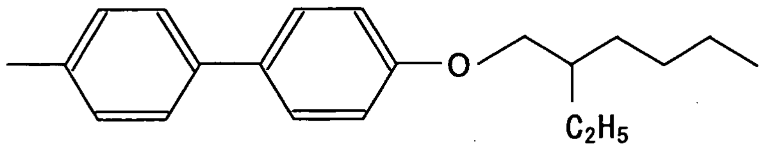

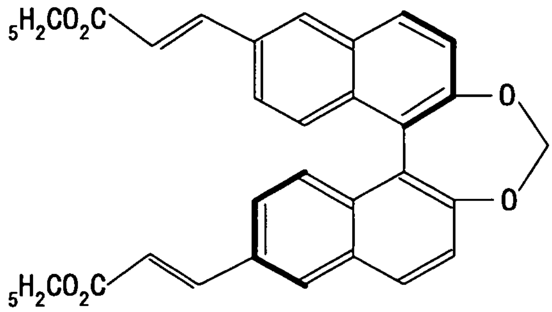

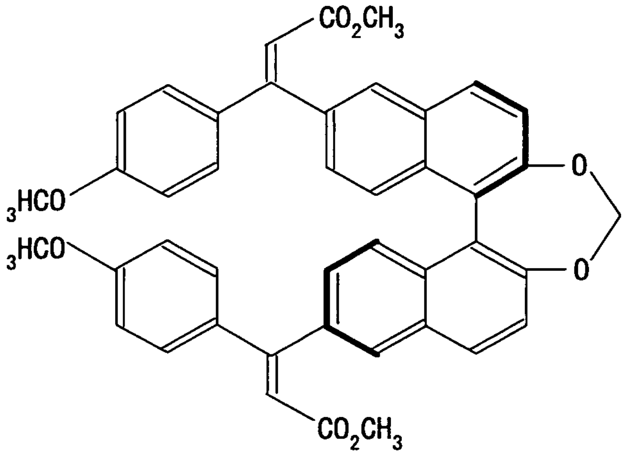

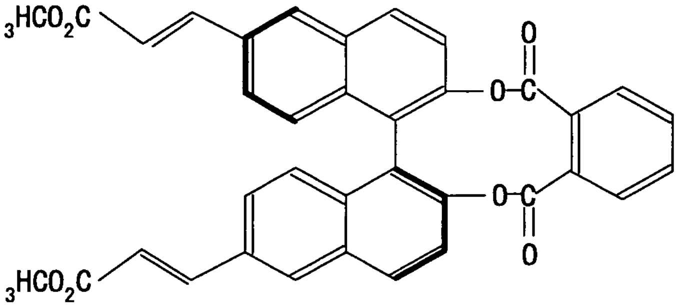

It is preferred (1) in cases of a monolayer of cholesteric liquid crystal layer that the content of the chiral compound in the monolayer of cholesteric liquid crystal layer is preferably 1 to 30% by mass, more preferably 1 to 20% by mass based on the total solid mass of the cholesteric liquid crystal layer. When the content is less than 1% by mass, the spiral pitch may be excessively long for an adaptable range of selective wavelength in systems, and when the content is above 30% by mass, the alignment may be insufficient in the cholesteric liquid crystal layer.

Polymerizable Monomer

Polymerizable monomers may be additionally included to the cholesteric liquid crystal layer in order to increase the curing level such as film strength. Additional use of polymerizable monomers may increase the strength of the cholesteric liquid crystal layer, where different twisting degrees have been set for liquid crystals through which light propagates (e.g., the distribution of wavelengths of light to be reflected has been created) and where the helical structure (i.e., selective reflection capability) has been fixed. Such polymerizable monomers are not necessarily to be added when the liquid crystal compound bears a polymerizable group in a molecule.

The polymerizable monomers may be properly selected from conventional ones depending on the purpose; examples thereof include monomers with an ethylenically unsaturated bond, more specifically, multifunctional monomers such as pentaerythritoltetraacrylate and dipentaerythritolhexaacrylate.

The specific examples of the monomers with ethylenically unsaturated bonds are those shown below. These may be used alone or in combination of two or more.

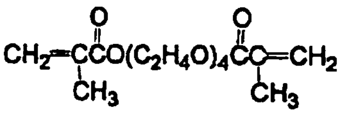

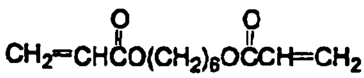

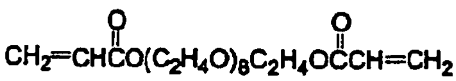

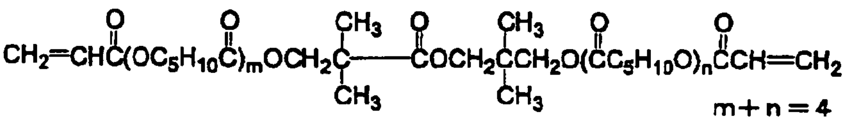

$m+n=4$

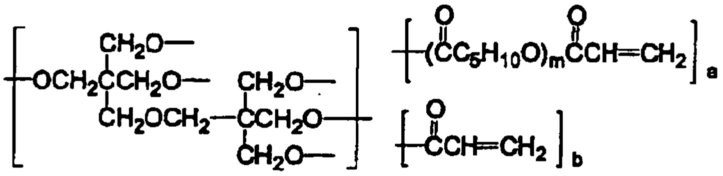

A : m=1, a=6, b=0
B : m=2, a=6, b=0

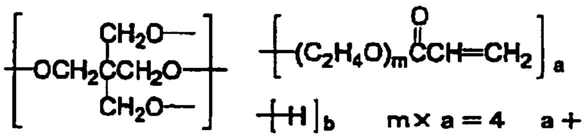

m×a=4 a+b=4

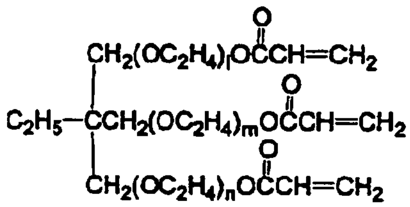

l+m+n=3. 5

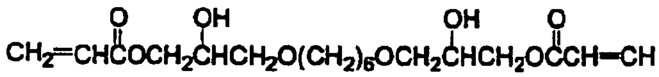

The content of the polymerizable monomers is preferably 0 to 50% by mass, more preferably 1% by mass to 20% by mass with respect to the total solid mass of the cholesteric liquid crystal layer. When the content of the polymerizable monomers is more than 50% by mass, the alignment may be inhibited in the cholesteric liquid crystal layer.

Other Components

The other components may be properly selected depending on the purpose; examples thereof include photopolymerization initiators, sensitizers, binder resins, polymerization inhibitors, solvents, surfactants, thickeners, dyes, pigments, ultraviolet absorbers and gelling agents.

The photopolymerization may be properly selected from conventional ones; examples thereof include p-methoxyphenyl-2,4-bis(trichloromethyl)-s-triazine, 2-(p-buthoxystyryl)-5-trichloromethyl-1,3,4-oxadiazole, 9-phenylacridine, 9,10-dimethylbenzphenazine, benzophenone/Michler's ketone, hexaarylbiimidazole/mercaptobenzoimidazole, benzyldimethylketal and thioxanthone/amine. These may be used alone or in combination of two or more.

The photopolymerization initiators may be commercially available; examples thereof include IRGACURE 907, IRGACURE 369, IRGACURE 784 and IRGACURE 814 (product name, by Ciba Specialty Chemicals K.K.); and Lucirin TPO (product name, by BASF Corp.).

The content of the photopolymerization initiators is preferably 0.1% by mass to 20% by mass, more preferably 0.5% by mass to 5% by mass based on the total solid mass of the cholesteric liquid crystal layer. When the content of the photopolymerization initiators is less than 0.1% by mass, it may take a long time for the polymerization because of reduced curing efficiency upon light irradiation. When the content of the photopolymerization initiator is greater than 20% by mass, it may result in poor optical transmittance over the range from ultraviolet to visible light.

The sensitizer is added as required in order to increase the cure level in the cholesteric liquid crystal layer. The sensitizer may be properly selected from conventional ones depending on the purpose; examples thereof include diethylthioxanthone and isopropylthioxanthone. The content of the sensitizer is preferably 0.001% by mass to 1% by mass based on the total solid mass of the cholesteric liquid crystal layer.

The binder resin may be properly selected from conventional ones depending on the purpose; examples thereof include polyvinyl alcohols; polystyrene compounds such as polystyrene and poly-$\alpha$-methylstyrene; cellulose resins such as methylcellulose, ethylcellulose and acetylcellulose; acid cellulose derivatives having a carboxylic group on their side chains; acetal resins such as polyvinyl formal and polyvinyl butyral; methacrylic acid copolymers; acrylic acid copolymers; itaconic acid copolymers; crotonic acid copolymers; malleic acid copolymers; partially-esterified malleic acid copolymers; homopolymers of acrylic acid alkylesters or homopolymers of methacrylic acid alkyl esters; and polymers having a hydroxyl group. These binder resins may be used alone or in combination of two or more.

Examples of alkyl groups in the homopolymers of acrylic acid alkylesters or homopolymers of methacrylic acid alkyl esters include methyl group, ethyl group, n-propyl group, n-butyl group, isobutyl group, n-hexyl group, cyclohexyl group and 2-ethylhexyl group.

Examples of the polymers having hydroxyl group include benzyl(meth)acrylate/ (methacrylic acid homopolymers) acrylic acid copolymers, and multicomponent copolymers of benzyl(meth)acrylate/(meth)acrylic acid/other monomers.

The content of the binder resin is preferably 0 to 80% by mass, more preferably 0 to 50% by mass based on the total solid mass the cholesteric liquid crystal layer. When the content the polymerizable monomers is more than 80% by mass, the alignment may be insufficient in the cholesteric liquid crystal layer.

The polymerization inhibitor may be properly selected depending on the purpose; examples thereof include hydroquinones, hydroquinone monoethylethers, phenothiazines, benzoquinones and derivatives thereof. The content of the polymerization inhibitor is preferably 0 to 10% by mass, more preferably 100 ppm to 1% by mass based on the total solid content of the polymerizable monomers.

The solvent may be properly selected from conventional ones depending on the purpose; examples thereof include alkoxypropionic acid esters such as 3-methoxypropionic acid methylester, 3-methoxypropionic acid ethylester, 3-methoxypropionic acid propylester, 3-ethoxypropionic acid methylester, 3-ethoxypropionic acid ethylester and 3-ethoxypropionic acid propylester; alkoxy alcohol esters such as 2-methoxypropylacetate, 2-ethoxypropylacetate and 3-methoxybutylacetate; lactic acid esters such as methyl lactate and ethyl lactate; ketones such as methyl ethyl ketone, cyclohexanone and methylcyclohexanone; $\gamma$-butyrolactone; N-methylpyrrolidone; dimethylsulfoxide; chloroform; and tetrahydrofuran. These solvents may be used alone or in combination of two or more.

Base Material

The base material may be properly selected in terms of the shape, configuration, size etc. depending on the purpose; the shape may be flat plate, film sheet etc.; the configuration may be of single-layered or multi-layered; and the size may be appropriately selected depending on the size of the optical recording medium.

The material of the base material may be inorganic or organic. Examples of the inorganic material include glasses, quartz glass and silicon. Examples of the organic material include acetate resins such as triacetylcellulose, polyester resins, polyethersulfone resins, polysulfone resins, polycarbonate resins, polyamide resins, polyimide resins, polyolefin resins, acrylic resins, polynorbornene resins, cellulose resins, polyarylate resins, polystyrene resins, polyvinylalcohol resins, polyvinylchloride resins, polyvinilidenechloride resins and polyacrylic resins. They may be used alone or in combination of two or more.

The base material may be properly prepared or commercially available. The thickness of the base material may be properly selected depending on the purpose; preferably the thickness is 10 $\mu$m to 500 $\mu$m, more preferably 50 $\mu$m to 300 $\mu$m. When the thickness of the base material is less than 10 $\mu$m, the adhesiveness may be poor due to deflection of the substrate, and when over 500 $\mu$m, the focus sites of informing and reference light are required to shift considerably, which possibly leading to larger size of the optical system.

The cholesteric liquid crystal layer may be formed, for example, by applying the coating liquids of the respective cholesteric liquid crystal layers on the base material, followed by drying and UV irradiation.

As for methods suitable for mass production, the base material is previously wound in a roll shape, and the coating liquid is applied on the base material using a long continuous coater such as bar coaters, die coaters, blade coaters and curtain coaters.

Examples of the coating processes include spin coating processes, casting processes, roll coating processes, flow coating processes, printing processes, dip coating processes, casting deposition processes, bar coating processes and gravure printing processes.

The UV irradiation condition may be appropriately selected depending on the purpose; the wavelength of UV light to be applied is preferably 160 nm to 380 nm, more preferably 250 nm to 380 nm; irradiation time is preferably 0.1

second to 600 seconds, more preferably 0.3 second to 300 seconds. It is possible to change the helical pitch in the cholesteric liquid crystal layer continuously in the thickness direction of the liquid crystal layer, by adjusting the UV irradiation condition.

It is also possible to add an ultraviolet absorber to the cholesteric liquid crystal layer in order to adjust the UV irradiation condition. The ultraviolet absorber may be appropriately selected depending on the purpose; examples thereof include benzophenone ultraviolet absorbers, benzotriazole ultraviolet absorbers, salicylic acid ultraviolet absorbers, cyanoacrylate ultraviolet absorbers and oxalic acid anilide ultraviolet absorbers. Specific examples of the ultraviolet absorber are disclosed in JP-A Nos. 47-10537, 58-111942, 58-212844, 59-19945, 59-46646, 59-109055 and 63-53544; JP-B Nos. 36-10466, 42-26187, 48-30492, 48-31255, 48-41572, 48-54965and 50-10726; and U.S. Patent Nos. 2,719,086, 3,707,375, 3,754,919 and 4,220,711.

The thickness of the respective cholesteric liquid crystal layers is preferably 1 μm to 10 μm, more preferably 2 μm to 7 μm. When the thickness of the cholesteric liquid crystal layer is less than 1 μm, selective reflectivity tends to be poor, and when the thickness is more than 10 μm, uniformly aligned liquid crystal molecules may be disturbed in the liquid crystal layer.

The thickness of the filter for optical recording medium, i.e. the total thickness of respective liquid crystal layers other than the base material, is preferably 1 μm to 30 μm, more preferably 3 μm to 10 μm.

The process for producing the filter may be appropriately selected depending on the purpose. For example, as described above, the filter can be produced by forming a colorant-containing layer on the base material and then forming a cholesteric liquid crystal on the colorant-containing layer.

The filter for optical recording medium may be appropriately selected depending on the purpose. The filter is preferably processed into a disc-shape for each base material through, for example, a stamping process, and is preferably disposed on the second substrate of an optical recording medium. Alternatively, the filter can be directly disposed on the second substrate without interposing a base material between them in a case where the filter is intended to use for the filter layer of the optical recording medium.

The thickness of the filter for optical recording medium, i.e. the total thickness of the colorant-containing layer and the cholesteric liquid crystal layer except for the base material, is preferably 2 to 200 μm, more preferably 3 to 100 μm. When the thickness is less than 2 μm, insufficient thickness of the colorant-containing layer may increase the noise light at recording, and when the thickness is more than 200 μm, the excessive large thickness of the filter layer may unduly greaten optical systems.

The filter for optical recording medium, in which the colorant-containing layer and the cholesteric liquid crystal layer are combined, preferably has an optical transmittance of 80% or more for a light of wavelength 655 nm and 40% or more for a light of wavelength 532 nm incident to the filter layer at an angle within ±20°.

More specifically, the filter for optical recording medium having a dielectric material-deposited layer on a colorant-containing layer shows reflection characteristics shown in FIG. 11 for light incident from the vertical direction (0°). In contrast, the reflection characteristics peak shifts to shorter wavelengths as light is incident from the oblique directions, and the reflection characteristics is like that shown in FIG. 12 when light is incident at an angle of 20°.

The reflection characteristics shown in FIGs.11 and 12 indicate that the filter for the optical recording medium of the present invention may assure the reflectivity of 40% or more for a light of wavelength 532 nm even when the light is incident at an angle of 0° to 20°, and thus no problems occur upon reading of signals, and that the leak light (wavelength = 532 nm) that has passed through the filter is absorbed while admitting a servo beam (wavelength = 655 nm), whereby noise can be prevented.

The inventive filter for optical recording medium may be applied to a wide variety of fields, used appropriately for forming or producing optical recording media of hologram type, and employed favorably for inventive optical recording media of hologram type, methods for producing the same, and optical recording or reproducing methods in particular.

## Optical Recording Medium

The inventive optical recording medium comprises an upper substrate, a lower substrate, a recording layer on the lower substrate, and a filter layer between the lower substrate and the recording layer, and also a reflective film, a first gap layer, a second gap layer, and other optional layers as required. The filter layer may be the inventive filter for optical recording medium described above.

### Substrate

The substrate may be properly selected depending on the application as for the shape, configuration, size etc.; the shape may be disc-like, card-like etc.; the material is required for the mechanical strength in terms of the hologram recording media. In the case that the light for recording or reproducing is directed through the substrate, it is necessary that the substrate is sufficiently transparent at the wavelength region of the employed light.

The material of the substrate is usually selected from glasses, ceramics, resins etc.; preferably, resins are employed in particular from the view point of formability and cost.

Examples of the resins include polycarbonate resins, acrylic resins, epoxy resins, polystyrene resins, acrylonitrile-styrene copolymers, polyethylene resins, polypropylene resins, silicone resins, fluorine resins, ABS resins and urethane resins. Among these, polycarbonate resins and acrylic resins are most preferable in view of their formability, optical characteristics and costs. The substrate may be properly prepared or commercially available.

Plural address-servo areas, i.e. addressing areas linearly extending in the radial direction of the substrate, are provided on the substrate at a given angle to one another, and each sector-form area between adjacent address-servo areas serves as a data area. In the address-servo areas, information for a focus servo operation and a tracking servo operation by means of a sampled servo system and address information are previously recorded (or pre-formatted) in the form of emboss pits or servo pits. The focus servo operation may be performed using a reflective surface of the reflective film. For example, wobble pits may be used as the information for tracking servo. The servo pit pattern is not necessarily required in the case that the optical recording medium is card-like shape.

The thickness of the substrate may be properly selected depending on the application; the thickness is preferably 0.1 to 5 mm, more preferably 0.3 to 2 mm. When the thickness of the substrate is less than 0.1 mm, the optical disc may be deformed during its storage; and when the thickness is more than 5 mm, the weight of the optical disc may be as heavy as over-loading on the drive motor. Recording Layer

Information may be recorded by use of holography on the recording layers. The materials for the recording layers are those capable of changing optical properties such as absorption index or refractive-index depending on intensity of radiation, upon irradiation of electromagnetic wave having a certain wavelength.

The material of the optical recording layer may be properly selected depending on the purpose; examples thereof include (i) polymerizable photopolymers that cause a polymerization reaction upon irradiation, (ii) photorefractive materials that exhibit a photorefractive effect to modulate the refractive index by causing a spatial electric charge distribution upon irradiation, (iii) photochromic materials that modulate the refractive index by causing a molecular isomerization upon irradiation, (iv) inorganic materials such as lithium niobate and barium titanate and (v) chalcogen materials.

The photopolymer of (i) described above may be properly selected depending on the purpose, for example, the photopolymer contains a monomer and a photoinitiator, and also other components such as sensitizer and oligomer as required.

The photopolymer may be one described in, for example, "Photopolymer Handbook" (by Kogyo Chosakai Publishing Co., 1989), "Photopolymer Technology" (by The Nikkan Kogyo Shinbun, Ltd., 1989), SPIE manuscript Vol. 3010 pp. 354-372 (1997) and SPIE manuscript Vol. 3291 pp. 89-103 (1998). In addition, the photopolymers described in US Patent Nos. 5759721, 4942112, 4959284 and 6221536; WO 97/44714, WO 97/13183, WO 99/26112 and WO 97/13183; Japanese Patent Nos. 2880342, 2873126, 2849021, 3057082 and 3161230; and Japanese Unexamined Patent Publication Nos. 2001-316416 and 2000-275859 may also be available.

The process for changing optical properties by irradiating a recording light onto the photopolymer may be based on diffusion of low molecular weight components. A component may be added that diffuses toward the reverse direction with that of the polymerizing component in order to mitigate the volume change on polymerization, or a compound having an acid cleavage structure may be further added in addition to the polymer. When the recording layer is formed using a photopolymer that contains the low molecular weight component, a structure capable of sustaining liquid may be required in the recording layer. When a compound having the acid cleavage structure is added, the volume change may be controlled by compensating the expansion due to the cleavage and the constriction due to the polymer polymerization.

The monomer may be properly selected depending on the purpose; example thereof include radically polymerizable monomers having an unsaturated bond such as acrylic and methacrylic group and cationic polymerization monomers having an ether structure such as epoxy and oxetane rings. These monomers may be monofunctional or polyfunctional and also be one utilizing a photo-crosslinking reaction.

Examples of the radically polymerizable monomers include acryloyl morpholine, phenoxyethylacrylate, isobornylacrylate, 2-hydroxypropylacrylate, 2-ethylhexylacrylate, 1,6-hexanediol diacrylate, tripropyleneglycol diacrylate, neopentylglycol PO modified diacrylate, 1,9-nonandiol diacrylate, hydroxylpivalic acid neopentylglycoldiacrylate, EO modified bisphenol A diacrylate, polyethyleneglycol diacrylate, pentaerythritol triacrylate, pentaerythritol tetraacrylate, pentaerythritol hexaacrylate, EO modified glycerol triacrylate, trimethylolpropane triacrylate, EO modified trimethylolpropane triacrylate, 2-naphtho-1-oxyethylacrylate, 2-carbazoyl-9-ylethylacrylate, (trimethylsilyloxy)dimethylsilyl propylacrylate, vinyl-1-naphthoate and N-vinylcarbazol.

Examples of the cationic polymerization monomers include bisphenol A epoxy resins, phenolnovolac epoxy resins, glycerol triglycidylether, 1,6-hexaneglycidylether, vinyltrimethoxysilane, 4-vinylphenyl trimethoxysilane, gamma-methacryloxy propyltriethoxysilane and compounds expressed by the formulas (A) to (E) below. These may be used alone or in combination of two or more.

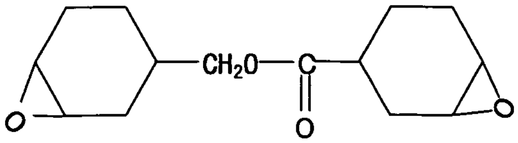

Structural formula A

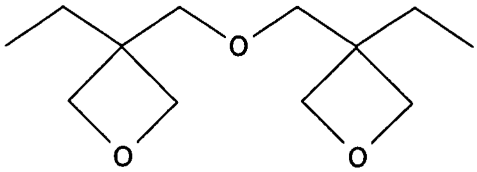

Structural formula B

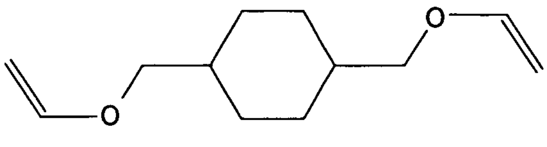

Structural formula C

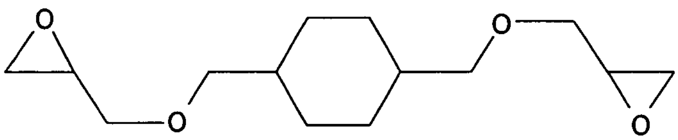

Structural formula D

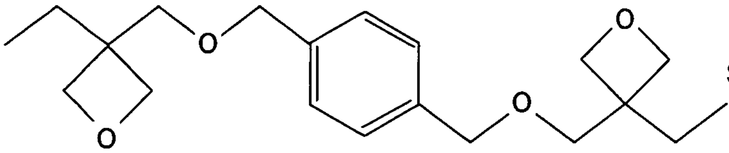

Structural formula E

The photoinitiator may be selected from materials sensitive to the recording light, for example, from those capable of inducing radical polymerization, cation polymerization, crosslinking reaction etc.

Examples of the photoinitiator include 2,2'-bis(o-chlorophenyl)-4,4',5,5'-tetraphenyl-1,1'-biimidazole, 2,4,6-tris (trichloromethyl)-1,3,5-triazine, 2,4-bis(trichloromethyl)-6-(p-methoxyphenylvinyl)-1,3,5-triazine, diphenyliodonium tetrafluoroborate, diphenyliodonium hexafluorophosphate, 4,4'-di-t-butyldiphenylodonium tetrafluoroborate, 4-diethylamino phenylbenzenediazonium hexafluorophosphate, benzoin, 2-hydroxy-2-methyl-1-phenylpropane-2-one, benzophenone, thioxanthone, 2,4,6-trimethylbenzoyldiphenylacyl phosphineoxide triphenylbutylborate tetraethylammonium and titanocene compounds expressed by the formulas below. These may be used alone or in combination of two or more, and may be combined with a sensitizing dye considering the wavelength of irradiating light.

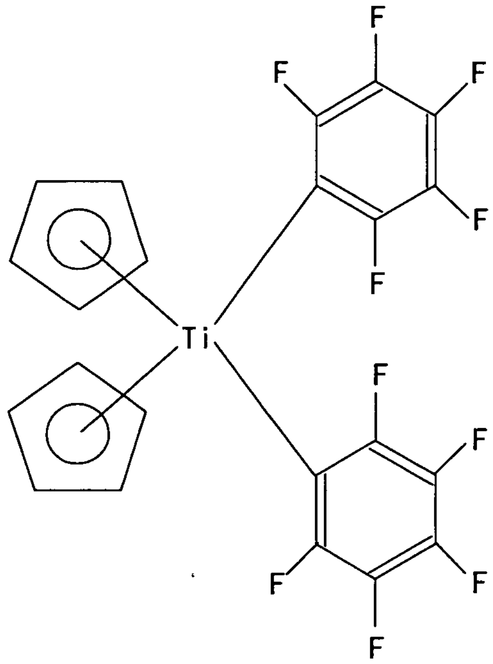

The photopolymer described above may be prepared by reaction of the monomer, the photoinitiator and the other components as required through stirring and mixing them. The resulting photopolymer, when being sufficiently of low viscosity, may be shaped by casting to prepare the recording layer. On the other hand, when being excessively viscous for the casting, the photopolymer is mounted on the lower substrate by use of a dispenser, then the photopolymer is pressed by the upper substrate in a manner that the upper substrate covers the lower substrate, thereby the photopolymer being spread entirely to form the recording layer.

The photorefractive material of (ii) described above may be properly selected depending on the purpose as long as the material exhibits the photorefractive effect; for example, the photorefractive material contains a charge generating material, a charge transporting material and other component as required.

The charge generating material may be properly selected depending on the purpose; examples thereof include phthalocyanine dyes such as metal phthalocyanines, non-metal phthalocyanines or derivatives thereof/pigments; naphthalocyanine dyes/pigments; azo dyes such as monoazo, disazo and triazo/pigments; perylene dyes/pigments; indigo dyes/ pigments; quinacridone dyes/pigments; polycyclic quinone dyes such as anthraquinone and anthanthron/pigments; cyanine dyes/pigments; charge transfer complexes of electron acceptor substance and electron donor substance represented by TTF-TCNQ; azurenium salts; and fullerenes represented by $C_{60}$ and $C_{70}$ and demethafullerenes derived therefrom.

The charge transporting material, which performs to transport holes or electrons, may be a low molecular weight or polymer compound.

The charge transporting material may be properly selected depending on the purpose; examples thereof include nitrogen-containing cyclic compounds such as indole, carbazole, oxazole, isooxazole, thiazole, imidazole, pyrazole, oxadiazole, pyrazoline, thiadiazole, triazole and derivatives thereof; hydrazone compounds; triphenyl amines, triphenyl methanes, butadienes; stilbenes; quinone compounds such as anthraquinone and diphenylquinone or the derivatives; fullerenes represented by $C_{60}$ and $C_{70}$ and derivatives thereof; pi-conjugated polymers or oligomers such as polyacetylene, polypyrrole, polythiophene and polyaniline; sigma-conjugated polymers or oligomers such as polysilane and polygerman; polycyclic aromatic compounds such as anthracene, pyrene, phenanthrene and coronene. These may be used alone or in combination of two or more.

As for the process for forming the recording layer using the photorefractive material, for example, a coating liquid is prepared by dissolving or dispersing the photorefractive material in to a solvent, a coating film is formed using the coating liquid, and removing the solvent from the coating film thereby to prepare the recording layer. In addition, the coating film may be formed from the photorefractive material which being liquidized by heating, the coating film is then rapidly cooled to form the recording layer.

The photochromic material of (iii) described above may properly selected depending on the purpose from materials capable of causing a photochromic reaction; examples thereof include azobenzene compounds, stilbene compounds, indigo compounds, thioindigo compounds, spiropyran compounds, spirooxazine compounds, flukido compounds, anthracene compounds, hydrazone compounds and cinnamic compounds. Among these, particularly preferable are azobenzene derivatives and stilbene derivatives that undergo a structural change of cis-trans isomerization upon light irradiation as well as spiropyran derivatives and spirooxazine derivatives that undergo a structural change of open or closed circular upon light irradiation.

The chalcogen material (v) described above is, for example, a material that comprises a chalcogenide glass containing a chalcogen element and metal particles that is dispersed into the chalcogenide glass upon light irradiation.

The chalcogenide glass may be of nonoxidative amorphous material containing a chalcogen element of S, Te or Se and capable of optically doping the metal particles.

Examples of the nonoxidative amorphous materials containing a chalcogen element include Ge-Se glasses, As-S glasses, As-Se glasses and As-Se-Ce glasses; among these, Ge-Se glasses are preferable. When the Ge-Se glasses are employed as the chalcogenide glass, the composition ratio of Ge/S may be optionally arranged depending on the wavelength of irradiated light; preferably, the chalcogenide glass has mainly a composition expressed by $GeS_2$.

The metal particles may be properly selected depending on the purpose from those having the property to be optically doped into the chalcogenide glass by light irradiation; examples thereof include Al, Au, Cu, Cr, Ni, Pt, Sn, In, Pd, Ti, Fe, Ta, W, Zn and Ag. Among these, Ag, Au and Cu are preferable since the optical doping easily progresses, particularly preferable is Ag due to remarkable tendency to cause the optical doping.

The content of the metal particles dispersed into the chalcogenide glass is preferably 0.1% by volume to 2% by volume based on the entire volume of the recording layer, more preferably 0.1% by volume to 1.0% by volume. When the content of the metal particles is less than 0.1% by volume, the accuracy of the recording may be low due to insufficient transmissivity change by the optical doping, and when over 2% by volume, the optical doping hardly progresses in a sufficient level due to lowered optical transmissivity of the recording material.

The recording layer may be properly formed by conventional processes depending on the material; examples of the preferable processes for forming the layers are vapor deposition processes, wet film-forming processes, MBE (molecular beam epitaxy) processes, cluster ion beam processes, molecular laminating processes, LB processes, printing processes and transfer processes. Among these, the vapor deposition processes and wet film-forming processes are preferable.

The vapor deposition process may be properly selected depending on the purpose from conventional ones; specific examples thereof include vacuum vapor deposition processes, resistance heating vapor deposition processes, chemical vapor deposition processes and physical vapor deposition processes. The chemical vapor deposition processes are exemplified more specifically by plasma CVD processes, laser CVD processes, heat CVD processes and gas source CVD processes.

The recording layer may be formed by a wet film forming process, for example, in a manner that materials for the recording layer are dissolved and/or dispersed in a solvent to form a coating solution, then the coating solution is applied and dried. The wet film forming process may be properly selected depending on the purpose from conventional ones; examples thereof include ink jet processes, spin coating processes, kneader coating processes, bar coating processes, blade coating processes, casting processes, dipping processes and curtain coating processes.

The thickness of the recording layer may be properly selected depending on the purpose; the thickness is preferably 1 $\mu$m to 1000 $\mu$m, more preferably 100 $\mu$m to 700 $\mu$m. When the thickness of the recording layer is within the preferable range, the sufficient S/N ratio may be attained even on the shift multiplex of 10 to 300; and the more preferable range may advantageously lead to more significant effect thereof.

Reflective Film

The reflective film is formed on the surface of the servo pit pattern of the second substrate. As for the material of the reflective film, such material is preferable that provides the recording light reference light with high reflectivity. When the wavelength of light to be adopted is 400 nm to 780 nm, Al, A1 alloys, Ag, Ag alloys and the like are preferably used. When the wavelength of light to be adopted is 650 nm or more, Al, A1 alloys, Ag, Ag alloys, Au, Cu alloys, TiN and the like are preferably used.

By use an optical recording medium e.g. DVD (digital video disc) which can reflect light by a reflective film and also can record or erase information, such directory information can be recorded and erased without adversely affecting holograms as those indicative of the locations where information has been recorded, the time when information has been recorded, and the locations where errors have occurred and how information has been re-recorded on spare areas.

The process for forming the reflective film may be properly selected depending on the purpose; examples thereof include various types of vapor deposition processes such as vacuum vapor deposition, sputtering, plasma CVD, photo CVD, ion plating and electron beam vapor deposition processes. Among these, sputtering processes are most preferable in view of mass productivity and film quality. The thickness of the reflective film is preferably 50 nm or more, more preferably 100 nm or more, in order to secure sufficient reflectivity.

First Gap Layer

The first gap layer is provided between the filter layer and the reflective film as required for smoothing the surface of the second substrate. Moreover, the first gap layer is effective to adjust the size of the hologram formed in the recording layer. Specifically, a gap layer between the recording layer and the servo pit pattern may be effective, since the recording layer requires the interference region of a larger size between the recording reference light and the informing light.

The first gap layer can be formed by, for example, applying UV curable resin etc. on the servo pit pattern by spin coating etc. and by curing the resin. In addition, when a filter layer is formed on a transparent base material, the transparent base material also serves as the first gap layer. The thickness of the first gap layer may be properly selected depending on the purpose; the thickness is preferably 1 μm to 200 μm.

Second Gap Layer

The second gap layer may be provided between the recording layer and the filter layer as required.

The material for the second gap layer may be properly selected depending on the purpose; examples thereof include transparent resin films such as triacetylcellulose (TAC), polycarbonate (PC), polyethylene terephthalate (PET), polystyrene (PS), polysulfone (PSF), polyvinylalcohol (PVA) and methyl polymethacrylate (PMMA); norbornene resin films such as ARTON (product name, by JSR Corp.), ZEONOA (product, by Nippon Zeon). Among these, those with high isotropy are preferable, and TAC, PC, ARTON and ZEONOA are most preferable.

The thickness of the second gap layer may be properly selected depending on the purpose; the thickness is preferably 1 μm to 200 μm.

The optical recording media will be explained in more detail with reference to figures in the following.

First Embodiment

FIG. 13 is a schematic cross-sectional view showing the structure of the first embodiment of the optical recording medium in the present invention. In the optical recording medium 21 according to the first embodiment, servo pit pattern 3 is formed on the second substrate 1 made of a polycarbonate resin or glass, and the servo pit pattern 3 is coated with Al, Au, Pt etc. to form reflective film 2. The servo pit pattern 3 is formed on the entire surface of the second substrate 1 in FIG. 13, alternatively, may be formed periodically as shown in FIG.1. In addition, the height of the servo pit pattern 3 is 1750 angstroms (175 nm) at maximum, which being significantly smaller than those of the other layers including the second substrate.

The first gap layer 8 is formed by applying UV curable resin or the like on the reflective film 2 of the lower substrate 1 by spin coating or the like. The first gap layer 8 is effective for protecting the reflective film 2 and for adjusting the size of holograms created in recording layer 4. Specifically, the interference region between the recording reference light and the informing light requires a level of size in the holographic recording layer 4, a gap may be effectively provided between the recording layer 4 and the servo pit pattern 3.

The filter layer 6 is provided on the first gap layer 8, and the holographic recording layer 4 is sandwiched between the filter layer 6 and the second substrate 5 (polycarbonate resin or glass substrate) to thereby constitute the optical recording medium 21.

In FIG. 13, the filter layer 6 transmits only red light and blocks other color lights. Since the informing light, recording light and reproduction reference light are of green or blue, they do not pass through the filter layer 6 instead turn into a return light to emit from the entrance/ exit surface A without reaching the reflective film 2.

The filter layer 6 is constituted of a laminate formed by laminating cholesteric liquid crystal layers 6a on colorant-containing layer 6b. The filter layer 6 of the laminate of the colorant-containing layer and the cholesteric liquid crystal layer may be directly formed on the first gap layer 8, or may be disposed by punching through the film of the colorant-containing layer and the cholesteric liquid crystal layer on the substrate into the shape of an optical recording medium. The cholesteric liquid crystal layer may be of monolayer or plural layers; reflectance of 40% or more may be attained for a wavelength range of $\lambda_0$ to $\lambda_0/\cos 20°$ ($\lambda_0$: wavelength of irradiating light) by way of changing successively the spiral pitch in its thickness direction in cases of monolayer or laminating plural layers of cholesteric layers, thereby the selective reflection wavelength may be far from shifting even when the incident angle being changed.

The optical recording medium 21 of the first embodiment may be of disc shape or card shape. The servo pit pattern is unnecessary where the optical recording medium 21 is a card shape. In the optical recording medium 21, the first substrate 1 is 0.6 mm thick, the first gap layer 8 is 100 μm thick, the filter layer 6 is 2 to 3 μm thick, the recording layer 4 is 0.6 mm thick, and the upper substrate 5 is 0.6 mm thick, leading to the total thickness of about 1.9 mm.

The optical operations around the optical recording medium 21 will be explained with reference to FIG. 15 in the following. Red light emitted from the servo laser source is reflected by a dichroic mirror 13 by almost 100%, and

passes through objective lens 12. The servo light is irradiated onto the optical recording medium 21 so as to focus on the reflective film 2. That is, the dichroic mirror 13 is designed to transmit green and blue lights but reflects red light almost by 100%. The servo light incident from the light entrance/exit surface A of the optical recording medium 21 passes through the upper substrate 5, recording layer 4, filter layer 6 and first gap layer 8, is reflected by the reflective film 2, and passes again through the first gap layer 8, filter layer 6, recording layer 4 and upper substrate 5 to emit from the light entrance/exit surface A. The return light passes through the objective lens 12 and is reflected by the dichroic mirror 13 by almost 100%, and then a servo information detector (not shown) detects servo information in the returning servo light. The detected servo information is used for focus servo operation, tracking servo operation, slide servo operation, and the like. The holographic material constructing the recording layer 4 is designed to be insensitive to red light. For this reason, even when the servo light passes through the recording layer 4 or is reflected diffusively by the reflective film 2, there arises no influence on the recording layer 4. In addition, the returning servo light reflected by the reflective film 2 is reflected almost 100% by the dichroic mirror 13; accordingly, the servo light is non-detectable by CMOS sensor or CCD 14 for the detection of reconstructed images or providing the reproducing light with no noise.

With respect to the reflection range of $\lambda_0$ to $1.3\lambda_0$, $1.3\lambda_0$ shown in FIGs. 3 and 7 equals to 692 nm when $\lambda_0$ is 532 nm, and thus a servo light of wavelength 655 nm is undesirably reflected. This reflection range is set in view of light incident at an angle of $\pm 40°$. When such light inclined at larger angles is used, a servo operation can be performed with no problem by using a servo light incident at an angle within $\pm 20°$ that has been masked. In addition, by securing larger helical pitch in the cholesteric liquid crystal layer in the filter layer used, it is also possible to readily cover a servo light incident to the filter layer at an angle within$\pm$ 20°. In that case, it is only necessary to laminate two cholesteric liquid crystal layers of $\lambda_0$ to $1.1\lambda_0$ as shown in FIGs. 5 and 9, thus there exists no problem to transmit the servo light.

Both of the informing light and recording reference light emitted from the recording/reproducing laser source pass through the polarizing plate 16 to form a linear polarization then to form a circular polarization when passing through the half mirror 17 and the quarter wave plate 15. The circular polarization then passes through the dichroic mirror 13, and illuminates the optical recording media 21 by action of the objective lens 12 in a manner that the informing light and the reference light create an interference pattern in the recording layer 4. The informing light and reference light enter from the light entrance/exit surface A and interact with each other in the recording layer 4 to form an interference pattern. Thereafter, the informing light and reference light enter into the recording layer 4 and the filter layer 6, and then are reflected to turn into a return light before reaching the bottom of the filter layer 6. That is, the informing light and record ing reference light do not reach the reflective film 2. This is because the filter layer, combined with the colorant-containing layer and the cholesteric liquid crystal layer, transmits exclusively red light. Alternatively as long as the leak light through the filter layer is less than the 20% of the initial incident light in terms of light intensity, even when the leak light turns into a return light upon reaching the bottom face, the light intensity included into the reproducing light comes to less than 20%x20%=4% after reflecting again at the filter layer, which indicating that there arises substantially no problem.

## Second Embodiment

FIG. 14 is a schematic cross-sectional view showing the configuration of the second embodiment of the inventive optical recording medium. In the optical recording medium 22 of the second embodiment, servo pit pattern 3 is formed on the polycarbonate resin or glass substrate 1, and the servo pit pattern 3 is coated with Al, Au, Pt or the like to form the reflective film 2. The height of the servo pit pattern 3 is usually 1750 angstroms (175 nm), which being similar with the first embodiment.

The difference between the first embodiment and the second embodiment is that the second gap layer 7 is disposed between the filter layer 6 and the recording layer 4 in the optical recording medium 22 of the second embodiment.

The filter layer 6, which being a laminate of a colorant-containing layer and a cholesteric liquid crystal layer, is formed on the first gap layer 8 after forming the first gap layer 8 and may be similar with that of the first embodiment.

In the second gap layer 7, there is a point at which both of the informing light and the reference light focus as described above. When this area is embedded by the photopolymer, excessive exposure takes place and thus an excess amount of monomers are consumed, leading to poor multiplexing recording capacity. Consequently, the non-reactive transparent second gap layer may be effectively provided.

In the optical recording medium 22, the lower substrate 1 is 1.0 mm thick, the first gap layer 8 is 100 $\mu$m thick, the filter layer 6 is from 3 to 5 $\mu$m thick, the second gap layer 7 is 70 $\mu$m thick, the recording layer 4 is 0.6 mm thick, the upper substrate 5 is 0.4 mm thick, which leading to a total thickness of about 2.2 mm.

When recording and reproducing information, the optical recording medium 22 having the structure described above is irradiated with a red servo light and a green informing light as well as a recording light and a reproducing reference light. The servo light enters from the light entrance/exit surface A, passes through the recording layer 4, the second gap layer 7, the filter layer 6 and the first gap layer 8, then is reflected by the reflective film 2 to turn into a return light. This return light sequentially passes through the first gap layer 8, the filter layer 6, the second gap layer 7, the recording layer 4 and upper substrate 5, and emits from the light entrance/exit surface A. The hologram material of the

recording layer 4 is designed to be insensitive to red light; therefore, the recording layer 4 receives no influence even when the servo light has passed through the recording layer 4 or has been reflected diffusively by the reflective film 2. The green informing light and the reference light etc. enter from the light entrance/exit surface A, then pass through the recording layer 4 and second gap layer 7, and reflected by the filter layer 6 to tern into a return light. The return light sequentially passes through the second gap layer 7, the recording layer 4 and the upper substrate 5 again, and emits from the light entrance/exit surface A. Upon reproduction of information, both of the reproducing reference light and the diffracted light generated by irradiating the reproducing reference light onto the recording layer do not reach the reflective film 2 and emit from the light entrance/exit surface A. The optical operations around the optical recording medium 22 (i.e. the objective lens 12, filter layer 6, CMOS sensor or CCD 14 of detector in FIG. 15) are similar to those in the first embodiment, thus the description thereof will be omitted.

Method of Producing Optical Recording Medium

The inventive method of producing an optical recording medium, which produces the inventive optical recording media described above, comprises at least a step of forming a filter layer, and also a step of forming a reflective film, a step of forming a recording film and other optional steps as required.

Step of Forming Filter Layer

In the step of forming the filter layer, the inventive filter for optical recording medium is processed into a shape of an optical recording medium, and the processed filter is laminated with the lower substrate to form a filter layer.

It is preferred in the step of forming a filter layer from the viewpoint of productivity that the inventive filter for optical cording media is processes into the shape of an optical recording medium, and the resulting filter is laminated to the lower substrate to form the filter layer.

The shape of the optical recording medium may be properly selected depending on the purpose; for example, the shape may be disc-like or card-like.

The method for processing the filter into a shape of the optical recording medium may be properly selected depending on the purpose; such processes may be employed as cutting processes with a press cutter, stamping processes with a stamping cutter and the like.

In carrying out the lamination, for example, the filter is laminated to the substrate using an adhesive or tackiness agent in a manner that no air bubble is trapped therebetween.

The adhesive may be properly selected depending on the purpose; examples thereof include UV curable adhesives, emulsion adhesives, one-component curable adhesives and two-component curable adhesives. These conventional adhesives may also be appropriately combined in two or more.

The tackiness agent may be properly selected depending on the purpose; examples thereof include rubber agents, acrylic agents, silicone agents, urethane agents, vinylalkyl ether agents, polyvinylalcohol agents, polyvinylpyrrolidone agents, polyacrylamide agents and cellulose agents.

The method for the laminating plural cholesteric liquid crystal layers may be properly selected from conventional ones depending on the purpose; preferable methods are, for example, (i) respective cholesteric liquid crystal layers each prepared independently are laminated using an adhesive or tackiness agent; (ii) respective cholesteric liquid crystal layers each prepared independently are laminated by means of heating and pressing; (iii) respective cholesteric liquid crystal layers each prepared independently are laminated by means of compatibility at interface area; (iv) a cholesteric liquid crystal layer is formed by a coating process, onto which another cholesteric liquid crystal layer is then formed by a coating process; (v) a cholesteric liquid crystal layer is formed on a transparent base material, onto which a polyvinyl alcohol film is formed and followed by a rubbing step, then a cholesteric liquid crystal layer is formed and followed by treatment for orienting and aging. Among these, the method of (v) is preferable in particular from the viewpoint of productivity and cost.

The adhesive or tackiness agent, in the laminating method of (i) described above, may be properly selected depending on the purpose; examples thereof include UV curable adhesives and acrylic tackiness agents. The thickness of the adhesive or tackiness agent may be properly selected depending on the purpose; from the viewpoint of optical properties and demands for thinning, the thickness of the adhesive is preferably 0.1 $\mu$m to 10 $\mu$m, more preferably 0.1 $\mu$m to 5 $\mu$m and the thickness of the tackiness agent is preferably 1 $\mu$m to 50 $\mu$m, more preferably 2 $\mu$m to 30 $\mu$m.

As for the laminating method (ii) described above, the methods of heating and pressing may be, for example, heat-sealing processes, ultrasonic processes, impulse-sealing processes and radiofrequency weld processes.

As for the laminating method (iii) described above, for example, the method for generating the compatibility is carried out by coating a solvent capable of dissolving or swelling slightly the cholesteric liquid crystal layer thereby inducing the compatibility at the interface.

Examples of the solvents, capable of dissolving or swelling slightly the cholesteric liquid crystal layer, include

aromatic compounds such as toluene, benzene and xylene; alcohols such as methanol, ethanol and isopropyl alcohol; cyclic hydrocarbons such as cyclohexane and cyclopentane; ketones such as acetone and methylethylketone (MEK); ethers such as isopropylether; esters such as ethyl acetate; and chlorine-containing solvents such as chloroform and dichloro methane; among these, particularly preferable are toluene, cyclohexane, cyclopentane, MEK and isopropyl alcohol.

As for the laminating method (iv) described above, the coating processes described above may also be employed properly depending on the purpose; examples thereof include inkjet processes, spin coating processes, kneader coating processes, bar coating processes, die coating processes, blade coating processes, casting processes, dipping processes and curtain coating processes.

The cholesteric liquid crystal layer may be formed appropriately by the coating process, for example, in a way that the material of the cholesteric liquid crystal layer and a solvent are employed to prepare a solution of the coating liquid, then the coating liquid is coated and dried.

When the coated layer is UV-cured as required, the condition may be properly selected depending on the purpose; for example, the UV-rays are preferably 160 nm to 380 nm, more preferably 250 nm to 380 nm. The exposure time is preferably 10 seconds to 600 seconds, more preferably 10 seconds to 300 seconds when the illumination intensity is 10 mW/cm$^2$, for example. Even when the illumination intensity is lowered to 1 mW/cm$^2$, for example, the exposure time may be substantially the same provided that the reaction initiator is increased as a conventional way, thus the exposure time may be preferably 10 seconds to 600 seconds, more preferably 10 seconds to 300 seconds, for example.

In the laminating method of (v) described above, the material of the transparent base material may be inorganic or organic materials. Examples of the inorganic materials include glasses, quartz glass and silicon. Examples of the organic materials include acetate resins such as triacetylcellulose, polyester resins, polyethersulfone resins, polysulfone resins, polycarbonate resins, polyamide resins, polyimide resins, polyolefin resins, acrylic resins, polynorbornene resins, cellulose resins, polyarylate resins, polystyrene resins, polyvinylalcohol resins, polyvinylchloride resins, polyvinilidenechloride resins and polyacrylic resins. These may be used alone or in combination of two or more.

## Optical Recording Method and Optical Reproducing Method

In the optical recording method according to the present invention, the informing light and the reference light are irradiated as a co-axial luminous flux, then the interference pattern formed by the interference of the informing light and the reference light is made use of recording the information on the recording layer.

In the optical reproducing method according to the present invention, a reproducing light is irradiated onto the interference pattern of the recording layer that is recorded by the optical recording method according to the present invention.

In the optical recording method and the optical reproducing method according to the present invention, the informing light with a two-dimensional intensity distribution and the reference light with almost the same intensity to that of the informing light are superimposed inside the photosensitive recording layer, the resulting interference pattern formed inside the recording layer induces a distribution of the optical properties of the recording layer to thereby record such distribution as the information. On the other hand, when the recorded information is to be read (reproduced), only the reference light (reproducing light) is irradiated onto the recording layer from the same direction to that irradiated at the time of recording, a light having a intensity distribution corresponding to the distribution of the optical property formed inside the recording layer is emitted from the recording layer as a diffracted light.

The optical recording method and the optical reproducing method according to the present invention may be carried out by use of the optical recording and reproducing apparatus explained below.

The optical recording and reproducing apparatus applied to the optical informing method and the optical reproducing method will be explained with reference to FIG.16.

FIG. 16 is an exemplary block flowchart showing the whole mechanism of the optical recording and reproducing apparatus according to the present invention. The optical recording and reproducing apparatus contains both of the optical recording apparatus and the optical reproducing apparatus.

This optical recording and reproducing apparatus 100 is equipped with spindle 81 on which the optical recording medium 20 is deposed, spindle motor 82 that rotates the spindle 81, and spindle servo circuit 83 that controls the spindle motor 82 so as to maintain the optical recording medium 20 at the predetermined revolution number.

The optical recording and reproducing apparatus 100 is also equipped with pickup unit 31 that irradiates the informing light and the reference light onto the optical recording medium to record information, and irradiates the reproducing reference light onto the optical recording medium 20 to detect the diffracted light to thereby reproduce the information recorded at the optical recording medium 20, and driving unit 84 that enables the pickup unit 31 to move in the radius direction of optical recording medium 20.

The optical recording and reproducing apparatus 100 is equipped with detecting circuit 85 that detects focusing error signal FE, tracking error signal TE, and reproducing signal RF from the output signal of the pickup unit 31, focusing

servo circuit 86 that drives an actuator in the pickup unit 31 so as to move an objective lens (not shown) to the thickness direction of the optical recording medium 20 based upon the focusing error signal FE detected by the detecting circuit 85 to thereby perform focusing servo, a tracking servo circuit 87 that drives an actuator in the pickup unit 31 so as to move an objective lens (not shown) to the thickness direction of the optical recording medium 20 based upon the tracking error signal TE detected by the detecting circuit 85 to thereby perform tracking servo, and a sliding servo circuit 88 that controls the driving unit 84 based upon the tracking error signal TE and an indication from a controller mentioned hereinafter so as to move the pickup unit 31 to the radius direction of the optical recording medium 20 to thereby perform sliding servo.

The optical recording and reproducing apparatus 100 is also equipped with signal processing circuit 89 that decodes output data of the CMOS or CCD array described below in the pickup unit 31, to thereby reproduce the data recorded in the data area of the optical recording medium 20, and to reproduce the standard clock or determines the address based on the reproducing signal RF from the detecting circuit 85, controller 90 that controls the whole optical recording and reproducing apparatus 100, and controlling unit 91 that gives various instructions.

The controller 90 is configured to input the standard clock or address information outputted from the signal processing circuit 89 as well as controlling the pickup unit 31, the spindle servo circuit 83, the sliding servo circuit 88 and the like. The spindle servo circuit 83 is configured to input the standard clock outputted from the signal processing circuit 89. The controller 90 contains CPU (center processing unit), ROM (read only memory), and RAM (random access memory), the CPU realizes the function of the controller 90 by executing programs stored in the ROM on the RAM, a working area.

The optical recording and reproducing apparatus, applicable for the optical informing method and the optical reproducing method, is equipped with the optical recording media according to the present invention, therefore, may prevent diffuse reflection of the informing light and the reference light from the reflective film of the optical recording medium and also prevent noise generation without the sift of selective reflection wavelength even when the incident angle is variable since the optical absorption layer absorbs the light leaked from the filter layer; consequently higher density recording may be attained over the prior art.

The present invention can solve the various problems in the art and provide filters for optical recording media capable of preventing diffuse reflection of informing and reference lights from reflective films of optical recording media and inhibiting noise therefrom without shifting the selective reflection wavelength even when the incident angle is variable, optical recording media of hologram type having the filters and capable of recording images with higher density, methods for producing the optical recording media with higher efficiency and lower cost, and also optical recording methods and optical reproducing methods that utilize the optical recording media.

Examples

The present invention will be explained with reference to Examples, to which the present invention should be limited in no way.

Example 1

Preparation of Filter for Optical Recording Medium

A base film was initially acquired which being formed from a polycarbonate film of 100 μm thick (product name: Youpilon, by Mitsubishi Gas Chemical Co.) on which polyvinyl alcohol (product name: MP203, by Kuraray Co.) being coated in 1 μm thick.

A coating liquid for colorant-containing layer was prepared having the following composition by a conventional manner.

| Composition of Coating Liquid for Colorant-Containing Layer | |
|---|---|
| Red pigment (C.I. Pigment Red 9) | 10 parts by mass |
| Binder resin (polyvinyl alcohol resin *1)) | 100 parts by mass |
| Water | 700 parts by mass |

*1) by Kuraray Co.

The coating liquid for colorant-containing layer was then coated onto the base film using a bar coater, followed by drying to form a colorant-containing layer of 3 μm thick. The base film with the colorant-containing layer was treated by a rubbing device to rub the surface of the colorant-containing layer, thereby to impart a liquid crystal alignment.

A coating liquid for cholesteric liquid crystal layer of Example 1 was prepared having the composition shown

in Table 1 by a conventional manner.

Table 1

| Component (part by mass) | Coating liquid for cholesteric liquid crystal layer |
|---|---|
| UV polymerizable liquid crystal *1) | 94.74 |
| Photoreactive chiral agent *2) | 6.50 |
| Photopolymerization initiator *3) | 0.10 |
| Sensitizer *4) | 0.02 |
| Solvent *5) | 400 |

*1) UV polymerizable liquid crystal: product name PALIOCOLOR LC242, by BASF Co.

*2) photoreactive chiral agent: optically active isosorbide derivative expressed by the following structural formula:

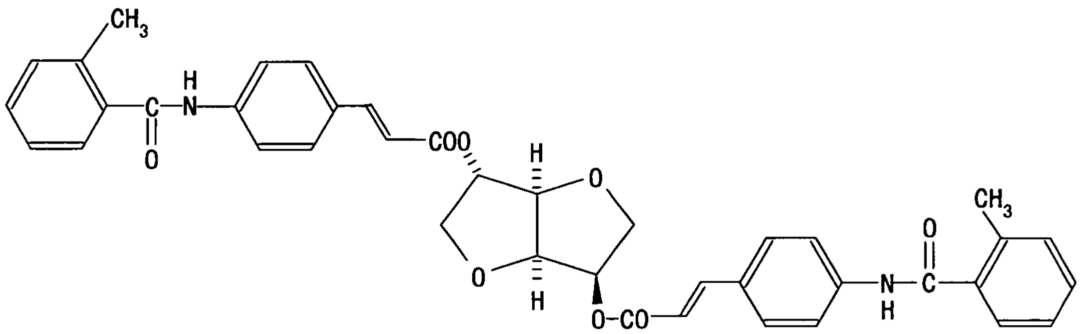

*3) photopolymerization initiator: product name IRGACURE 369, by Ciba Specialty Chemicals K.K.

*4) sensitizer: diethylthioxanthone

*5) solvent: methylethylketone (MEK)

The coating liquid for cholesteric liquid crystal layer was coated on the colorant-containing layer of the base film using a bar coater, followed by drying and alignment-conditioning at 110°C for 20 seconds. Then the cholesteric liquid crystal layer was irradiated at 110°C from a super-high pressure mercury lamp for one minute through a band-pass filter having a central wavelength of 365 nm, followed by allowing to stand in a dark place at 110°C for 5 minutes. Thereafter the band-pass filter was removed, the cholesteric liquid crystal layer was further exposed over its entire surface using the super-high pressure mercury lamp at an irradiation energy of 500 mJ/$cm^2$ while blowing nitrogen gas thereto to polymerize and to cure, thereby a cured film of the cholesteric liquid crystal layer was formed having a thickness of 5 μm.

Consequently the filter for optical recording medium of Example 1 was prepared.

Reference Example 1

Preparation of Filter for Optical Recording Medium

The optical recording medium of Reference Example 1 was prepared in the same manner as Example 1 except that no colorant-containing layer was formed.

The filters for optical recording medium of Example 1 and Reference Example 1 were measured in terms of reflection properties using a spectral reflectometer (light source: L-5662, photo multi-channel analyzer: PMA-11, both by Hamamatsu Photonics KK).

As a result, it was confirmed that the filters for optical recording medium of Example 1 and Reference Example 1 can reflect the light of selective wavelength 532 nm at a rate of 40% or more with respect to incident angle within ±20° as shown in FIGs. 5 and 6. The bandwidth of the selective reflection wavelength was as wide as 180 nm.

Example 2

Preparation of Filter for Optical Recording Medium

Coating liquids for cholesteric liquid crystal layer A and B were prepared having the compositions shown in Table 2 below by a conventional manner.

Table 2

| Component (part by mass) | Coating liquid for cholesteric liquid crystal layer | |
|---|---|---|
| | A | B |
| UV polymerizable liquid crystal *1) | 93.16 | 94.02 |
| Photoreactive chiral agent *2) | 6.84 | 5.98 |
| Photopolymerization initiator *3) | 0.10 | 0.10 |
| Sensitizer *4) | 0.02 | 0.02 |
| Solvent *5) | 400 | 400 |

*1) UV polymerizable liquid crystal: product name PALIOCOLOR LC242, by BASF Co.
*2) chiral agent: product name PALIOCOLOR LC756, by BASF Co.
*3) photopolymerization initiator: product name IRGACURE 369, by Ciba Specialty Chemicals K.K.
*4) sensitizer: diethylthioxanthone
*5) solvent: methylethylketone (MEK)

The coating liquid for cholesteric liquid crystal layer A was coated on the colorant-containing layer of the base film, similarly as that of Example 1, using a bar coater, followed by drying and alignment-conditioning at 110°C for 20 seconds. Thereafter the cholesteric liquid crystal layer was further exposed at 110 °C using the super-high pressure mercury lamp at an irradiation energy of 500 mJ/$cm^2$ thereby a cured film of the cholesteric liquid crystal layer A was formed having a thickness of 2 μm.

The coating liquid for cholesteric liquid crystal layer B was coated on the cholesteric liquid crystal layer A using a bar coater, followed by drying and alignment-conditioning at 110°C for 20 seconds. Thereafter the cholesteric liquid crystal layer was further exposed at 110 °C using the super-high pressure mercury lamp at an irradiation energy of 500

mJ/cm$^2$ thereby a cured film of the cholesteric liquid crystal layer B was formed having a thickness of 2 μm.

As a result, the filter for optical recording medium of Example 2 was prepared, in which the filter has a two-layer configuration and exhibits a circular polarization-separating ability, the central wavelengths are different between the cholesteric liquid crystal layers, and the spiral rotation directions are the same between the cholesteric liquid crystal layers.

Example 3

Preparation of Filter for Optical Recording Medium

Coating liquids for cholesteric liquid crystal layer A, B and C were prepared having the compositions shown in Table 3 below by a conventional manner. The compositions A and B in Table 3 are same with those of Table 2.

The coating liquid for cholesteric liquid crystal layer C was further coated on the cured film of the cholesteric liquid crystal layer B of Example 2 using a bar coater, followed by drying and alignment-conditioning at 110°C for 20 seconds. Thereafter the cholesteric liquid crystal layer was further exposed at 110 °C using the super-high pressure mercury lamp at an irradiation energy of 500 mJ/cm$^2$ thereby a cured film of the cholesteric liquid crystal layer C was formed having a thickness of 2 μm.

Consequently the filter for optical recording medium of Example 3 was prepared having a three-layer configuration.

Table 3

| Component (part by mass) | Coating liquid for cholesteric liquid crystal layer | | |
|---|---|---|---|
| | A | B | C |
| UV polymerizable liquid crystal*1) | 93.16 | 94.02 | 94.74 |
| Photoreactive chiral agent *2) | 6.84 | 5.98 | 5.26 |
| Photopolymerization initiator *3) | 0.10 | 0.10 | 0.10 |
| Sensitizer *4) | 0.02 | 0.02 | 0.02 |
| Solvent *5) | 400 | 400 | 400 |

*1) UV polymerizable liquid crystal: product name PALIOCOLOR LC242, by BASF Co.
*2) chiral agent: product name PALIOCOLOR LC756, by BASF Co.
*3) photopolymerization initiator: product name IRGACURE 369, by Ciba Specialty Chemicals K.K.
*4) sensitizer: diethylthioxanthone
*5) solvent: methylethylketone (MEK)

The filters for optical recording medium of Examples 2 and 3 were measured in terms of reflection properties using a spectral reflectometer (light source: L-5662, photo multi-channel analyzer: PMA-11, both by Hamamatsu Photonics KK).

As a result, it was confirmed that the filter for optical recording medium of Example 2 can reflect the light of selective wavelength 532 nm at a rate of 40% or more with respect to incident angle within ±20° as shown in FIGs. 9 and 10. It was also confirmed that the filter for optical recording medium of Example 3 can reflect the light of selective wavelength 532 nm at a rate of 40% or more with respect to incident angle within ±20° as shown in FIGs. 7 and 8.

Example 4

Preparation of Optical Recording Medium

A substrate of conventional polycarbonate resin of diameter 120 mm and thickness 0.6 mm, which being commercially used for DVD+RW, was employed for the lower substrate. A servo pit pattern was formed on the entire surface of the substrate with track pitch 0.74 μm, groove depth 175 nm and groove width 300 nm.

A reflective film was initially formed on the surface of servo pit pattern of the lower substrate. The material of the reflective film was aluminum (Al). The reflective film A1 was formed by a DC magnetron spattering process into 200 nm thick.

Then the resulting filter for optical recording medium of Example 1 was stamped into a disc shape of a predetermined size so that the filter could be arranged on the substrate. The disc-shaped filter was bonded to the substrate, with the base film side being in contact with the servo pit pattern. The filter was bonded to the substrate by use of a UV curable resin or a tackiness agent while taking care of excluding bubbles or foams. In this way the filter layer was formed.

The coating liquid of photopolymer was prepared for the material of the recording layer.

| Composition of Coating Liquid of Photopolymer | |
|---|---|
| Di(urethaneacrylate)oligomer (ALU-351) *1) | 59 parts by mass |
| Isobonyl acrylate | 30 parts by mass |
| Vinylbenzoate | 10 parts by mass |
| Polymerization initiator *2) | 1 part by mass |

*1) by Echo Resins Co.
*2) IRGACURE 784, by Ciba Specialty Chemicals K.K.

The resulting coating liquid of photopolymer was thickly applied on the filter layer using a dispenser. While an upper substrate made of a polycarbonate resin with diameter 12 cm and thickness 0.6 mm was being pressed onto the photopolymer, the disk edge and the upper substrate were bonded with an adhesive. The disk had a flange portion at its edge which adjusting the photopolymer layer to 500 μm thick. Bonding the upper substrate with the flange portion could define the thickness of the photopolymer layer and excessive photopolymer could flow out appropriately. In this way the optical recording medium of Example 4 was prepared.

Example 5

Preparation of Optical Recording Medium

The optical recording medium of Example 5 was prepared in the same way as Example 4 except that the filter for optical recording medium of Example 1 was changed into the filter for optical recording medium of Example 2.

Example 6

Preparation of Optical Recording Medium

The optical recording medium of Example 6 was prepared in the same way as Example 4 except that the filter for optical recording medium of Example 1 was changed into the filter for optical recording medium of Example 3.

Example 7

Preparation of Optical Recording Medium

The optical recording medium of Example 7 was prepared in the same way as Example 4 except that a second gap layer was provided between the reflective film and the filter layer. The second gap layer was adhered by a UV curable resin using a polycarbonate film of 100 μm thick.

Reference Example 2

Preparation of Optical Recording Medium

The optical recording medium of Reference Example 2 was prepared in the same way as Example 4 except that the filter for optical recording medium of Example 1 was changed into the filter for optical recording medium of Reference Example 2.

Performance Evaluation

The resulting optical recording media of Examples 4 to 7 and Reference Example 2 were evaluated in terms of possible multiple-recording times, shift level and noise. The results are shown in Table 4.

Possible Multiple-Recording Times

The resulting optical recording media of Examples 4 to 7 and Reference Example 2 were mounted to an optical recording and reproducing apparatus as shown in FIG. 16, then information was recorded, and possible multiple- recording times were measured.

Shift Level and Noise

The resulting optical recording media of Examples 4 to 7 and Reference Example 2 were mounted to a holography recording/regenerating apparatus (SHOT-1000, by Pulstec Industrial Co.) and subjected to shift-multiple-recording while shifting the sample table in several microns per time. Then the shift level corresponding to the multiple-recording property and the noise level of interference patterns which generates from recording light leaked through the wavelength-selective film and reaches the servo pit pattern at reproducing. The noise level was evaluated based on the measurements in accordance with the criteria shown below. It is known that the smaller is the shift level the higher is the multiple-recording density; and actual drive design is likely to be unfeasible in cases that the noise level is below C.

Evaluation Criteria of Noise Level

$$A: 8 \leq S/N$$

$$B: 6 \leq S/N < 8$$

$$C: 4 \leq S/N < 6$$

$$D: S/N < 4$$

Table 4

| | Multiple recording times | Shift level (μm) | Noise level Noise level |
|---|---|---|---|
| Ex. 4 | 5 to 10 | 40 | B |
| Ex. 5 | 5 to 10 | 54 | C |
| Ex. 6 | 5 to 10 | 43 | B |
| Ex. 7 | 50 to 250 | 10 | A |
| Ref. Ex. 2 | 5 to 10 | 56 | D |

The results of Table 4 demonstrate that multiple layers of cholesteric liquid crystal layers may make possible the multiple high density recording that is the final target of optical recording media of hologram type, and also it is confirmed that the adjustment of intensities of informing and reproducing lights allows some variation.

Industrial Applicability

The inventive filters for optical recording medium may be appropriately used for wavelength-selective reflection films in optical recording media of hologram type that can inhibit noise without shifting the selective reflection wavelength even when the incident angle is variable and record images with

higher density over the prior art.

The inventive optical recording media may be widely used for various optical recording media of hologram type that can inhibit noise without shifting the selective reflection wavelength even when the incident angle is variable and record images with higher density over the prior art.

## Claims

1. A filter for optical recording medium, comprising a colorant-containing layer,
wherein the colorant-containing layer comprises at least one of pigments and dyes, and a cholesteric liquid crystal layer is disposed on the colorant-containing layer.

2. The filter for optical recording medium according to claim 1, wherein the cholesteric liquid crystal layer comprises a nematic liquid-crystal compound and a photoreactive chiral compound.

3. The filter for optical recording medium according to claim 2, wherein the photoreactive chiral compound has a chiral site and a photoreactive group, and the chiral site is at least one selected from isosorbide compounds, isomannide compounds and binaphthol compounds.

4. The filter for optical recording medium according to claim 3, wherein the photoreactive group is one that undergoes trans-cis isomerization of a carbon-carbon double bond upon light irradiation.

5. The filter for optical recording medium according to any one of claims 1 to 4, wherein the colorant is a red pigment.

6. The filter for optical recording medium according to claim 5, wherein the red pigment exhibits a transmittance of 33% or less to the light of 532 nm and a transmittance of 66% or more to the light of 655 nm.

7. The filter for optical recording medium according to any one of claims 1 to 6, wherein the colorant-containing layer comprises a binder resin and the binder resin is a polyvinyl alcohol resin.

8. The filter for optical recording medium according to any one of claims 1 to 7, wherein the surface of the colorant-containing layer is rubbing-treated.

9. The filter for optical recording medium according to any one of claims 1 to 8, wherein the cholesteric liquid crystal layer has a circular polarization-separating ability.

10. The filter for optical recording medium according to any one of claims 1 to 9, wherein the cholesteric liquid crystal layer is a monolayer.

11. The filter for optical recording medium according to any one of claims 1 to 9, wherein the cholesteric liquid crystal layer is comprised of plural layers of which the spiral rotation directions are the same each other.

12. The filter for optical recording medium according to claim 11, wherein the plural layers of the cholesteric liquid crystal layer have selective-reflection central wavelengths different each other.

13. The filter for optical recording medium according to any one of claims 1 to 12, wherein the bandwidth of the selective reflection wavelength is 100 nm or more in the cholesteric liquid crystal layer.

14. The filter for optical recording medium according to any one of claims 1 to 13, wherein the band of the selective reflection wavelength is successive in the cholesteric liquid crystal layer.

15. The filter for optical recording medium according to any one of claims 1 to 14, wherein a light having a first wavelength is transmitted and a light having a second wavelength different from the first wavelength is reflected.

16. The filter for optical recording medium according to claim 15, wherein the first wavelength is 350 nm to 600 nm, and the second wavelength is 600 nm to 900 nm.

**17.** The filter for optical recording medium according to any one of claims 1 to 16, wherein the reflectance is 40% or more in a range of $\lambda_0$ to $\lambda_0$/cos20° ($\lambda_0$: wavelength of irradiating light).

**18.** The filter for optical recording medium according to any one of claims 1 to 17, wherein the reflectance is 40% or more in a range of $\lambda_0$ to $\lambda_0$/cos40° ($\lambda_0$: wavelength of irradiating light).

**19.** The filter for optical recording medium according to any one of claims 1 to 18, utilized as a selective reflection film of optical recording medium to record information on the basis of holography.

**20.** The filter for optical recording medium according to claim 19, wherein a coaxial light beam of an informing light and a reference light is irradiated onto the optical recording medium, which records information by use of an interference pattern between the informing light and the reference light.

**21.** An optical recording medium, comprising an upper substrate, a lower substrate, a recording layer on the lower substrate to record information on the basis of holography, and a filter layer between the lower substrate and the recording layer,
wherein the filter layer comprises a colorant-containing layer, the colorant-containing layer comprises at least one of pigments and dyes, and a cholesteric liquid crystal layer is disposed on the colorant-containing layer.

**22.** The optical recording medium according to claim 21, wherein the cholesteric liquid crystal layer comprises a nematic liquid-crystal compound and a photoreactive chiral compound.

**23.** The optical recording medium according to claim 22, wherein the photoreactive chiral compound has a chiral site and a photoreactive group, and the chiral site is at least one selected from isosorbide compounds, isomannide compounds and binaphthol compounds.

**24.** The optical recording medium according to claim 23, wherein the photoreactive group is one that undergoes trans-cis isomerization of a carbon-carbon double bond upon light irradiation.

**25.** The optical recording medium according to any one of claims 21 to 24, wherein the colorant is a red pigment.

**26.** The optical recording medium according to claim 25, wherein the red pigment exhibits a transmittance of 33 % or less to the light of 532 nm and a transmittance of 66% or more to the light of 655 nm.

**27.** The optical recording medium according to any one of claims 21 to 26, wherein the colorant-containing layer comprises a binder resin and the binder resin is a polyvinyl alcohol resin.

**28.** The optical recording medium according to any one of claims 21 to 27, wherein the surface of the colorant-containing layer is rubbing-treated.

**29.** The optical recording medium according to any one of claims 21 to 28, wherein the cholesteric liquid crystal layer has a circular polarization-separating ability.

**30.** The optical recording medium according to any one of claims 21 to 29, wherein the cholesteric liquid crystal layer is a monolayer.

**31.** The optical recording medium according to any one of claims 21 to 29, wherein the cholesteric liquid crystal layer is comprised of plural layers of which the spiral rotation directions are the same each other.

**32.** The optical recording medium according to claim 31, wherein the plural layers of the cholesteric liquid crystal layer have selective-reflection central wavelengths different each other.

**33.** The optical recording medium according to any one of claims 21 to 32, wherein the bandwidth of the selective reflection wavelength is 100 nm or more in the cholesteric liquid crystal layer.

**34.** The optical recording medium according to any one of claims 21 to 31, wherein the band of the selective reflection wavelength is successive in the cholesteric liquid crystal layer.

**35.** The optical recording medium according to any one of claims 21 to 34, wherein a light having a first wavelength is transmitted and a light having a second wavelength different from the first wavelength is reflected.

**36.** The optical recording medium according to claim 35, wherein the first wavelength is 350 nm to 600 nm, and the second wavelength is 600 nm to 900 nm.

**37.** The optical recording medium according to any one of claims 21 to 36, wherein the reflectance is 40% or more in a range of λ0 to $\lambda_0$/cos20° ($\lambda_0$: wavelength of irradiating light).

**38.** The optical recording medium according to any one of claims 21 to 37, wherein the reflectance is 40% or more in a range of $\lambda_0$ to $\lambda_0$/cos40° ($\lambda_0$: wavelength of irradiating light).

**39.** The optical recording medium according to any one of claims 21 to 38, wherein the substrate has a servo pit pattern.

**40.** The optical recording medium according to claim 39, wherein a reflective film is provided on the servo pit pattern.

**41.** The optical recording medium according to claim 40, wherein the reflective film is of metal.

**42.** The optical recording medium according to claim 40 or 41, wherein a first gap layer is provided between the filter layer and the reflective layer in order to smoothen the surface of the substrate.

**43.** The optical recording medium according to any one of claims 21 to 42, wherein a second gap layer is provided between the recording layer and the filter layer.

**44.** A method for producing an optical recording medium that comprises an upper substrate, a lower substrate, a recording layer on the lower substrate to record information on the basis of holography, and a filter layer between the lower substrate and the recording layer,
wherein the method comprising:

processing a filter for optical recording medium into a shape of an optical recording medium, and
laminating the processed filter to the lower substrate to form a filter layer,

wherein the filter for optical recording medium is any one according to claims 1 to 20.

**45.** An optical recording method comprising:

irradiating a coaxial light beam of an informing light and a reference light onto an optical recording medium, and
recording information on the recording layer by use of an interference pattern between the informing light and the reference light,

wherein the optical recording medium is any one according to claims 21 to 43.

**46.** An optical reproducing method comprising:

irradiating a reference light onto an interference pattern, and
reproducing information,

wherein the interference pattern is recorded onto a recording layer by the optical recording method according to the claim 45.

FIG. 1

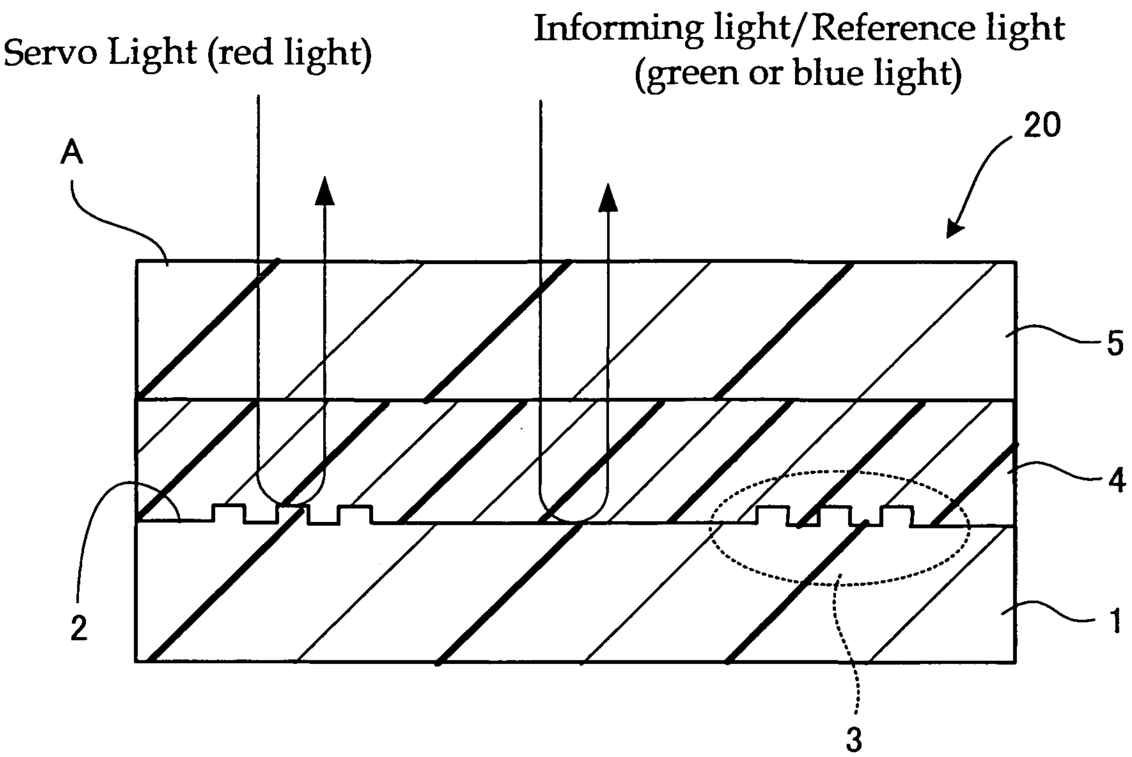
Servo Light (red light)
Informing light/Reference light
(green or blue light)
20
A
5
4
2
1
3

FIG. 2

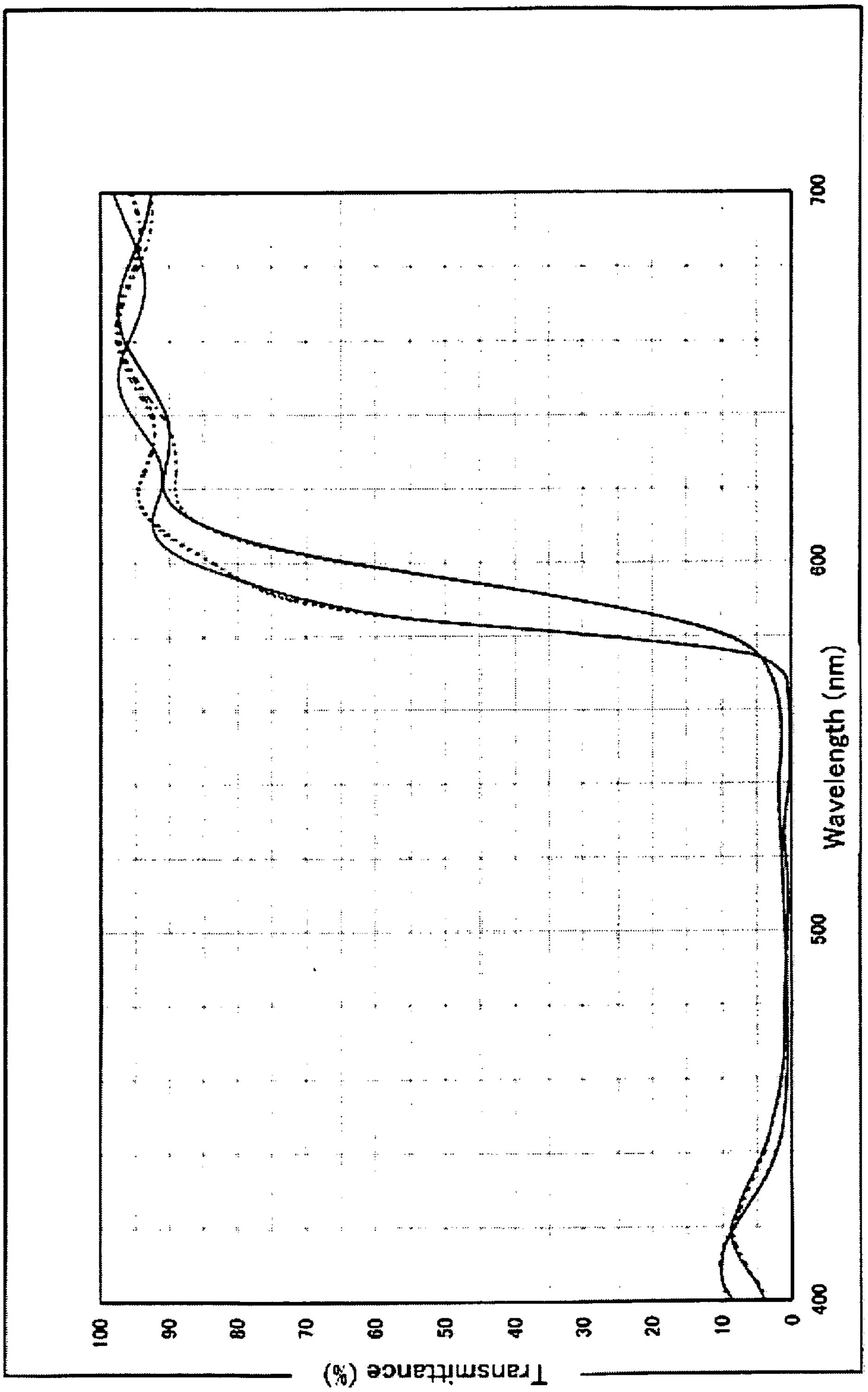
Transmittance (%)
100
90
80
70
60
50
40
30
20
10
0
400
500
600
700
Wavelength (nm)

FIG. 3

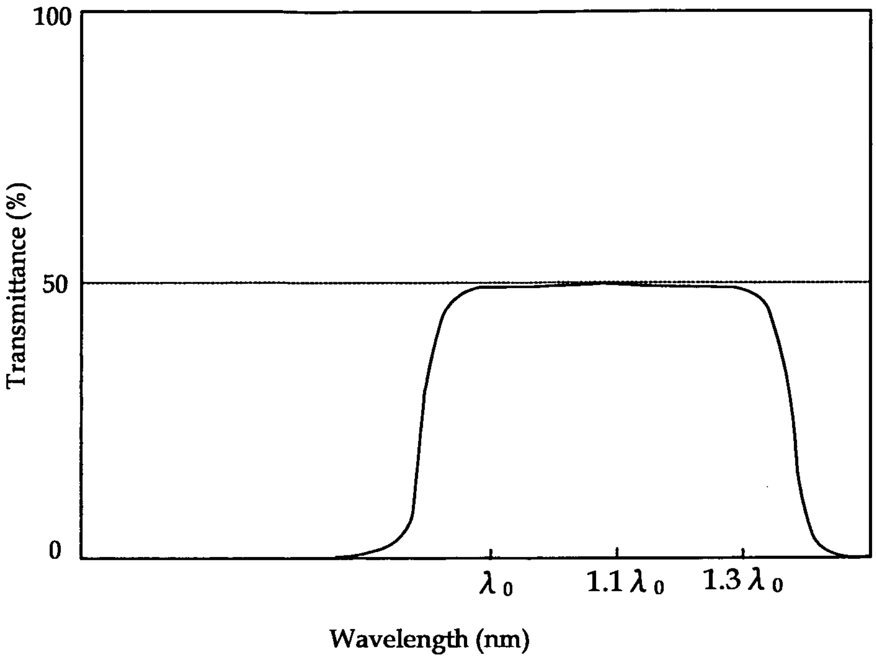
100
50
0
Transmittance (%)
λ0
1.1λ0
1.3λ0
Wavelength (nm)

FIG. 4

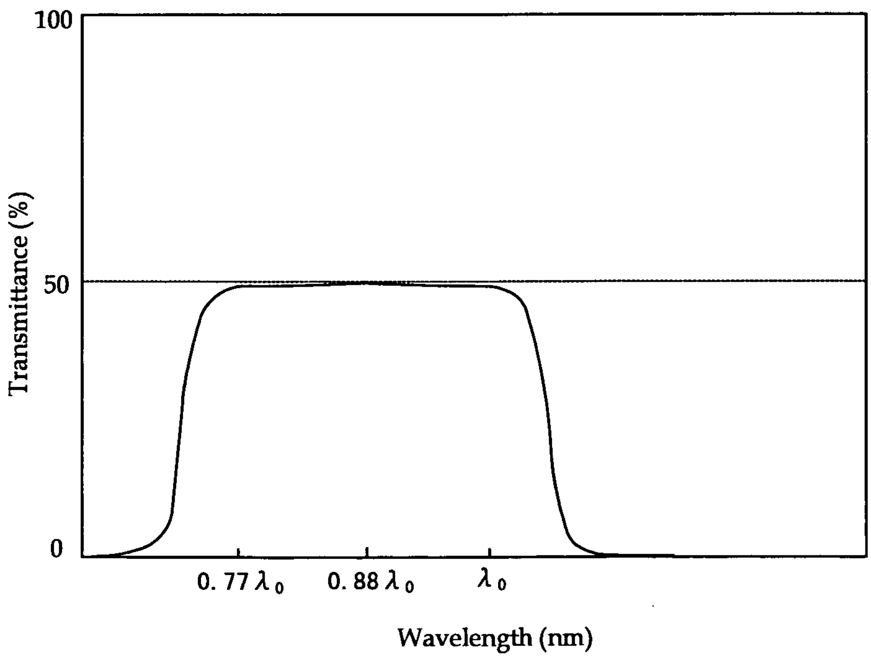
100
50
0
Transmittance (%)
0.77λ0
0.88λ0
λ0
Wavelength (nm)

FIG. 5

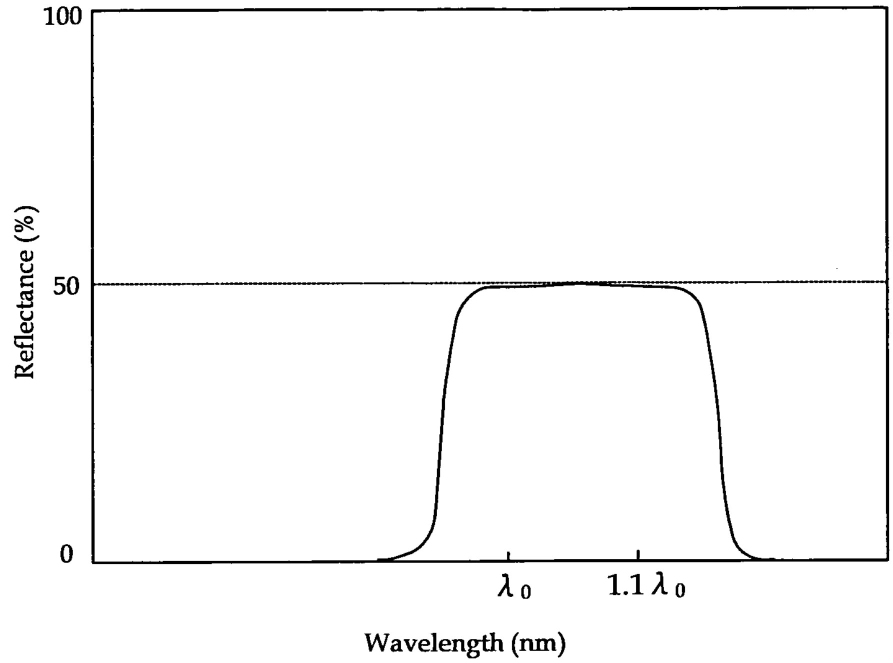
100
50
0
Reflectance (%)
λ0
1.1λ0
Wavelength (nm)

FIG. 6

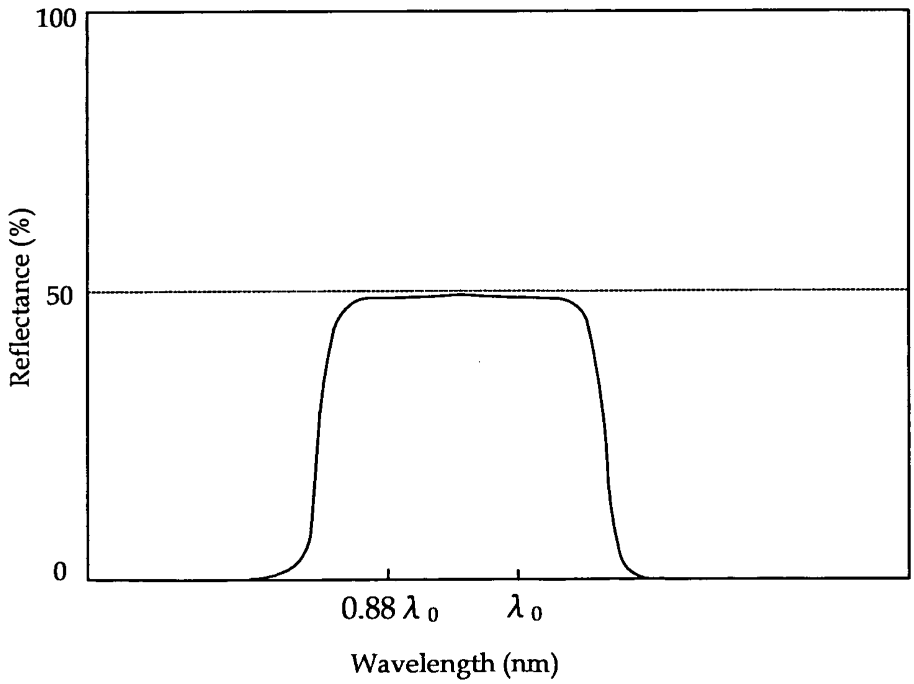
100
50
0
Reflectance (%)
0.88λ0
λ0
Wavelength (nm)

FIG. 7

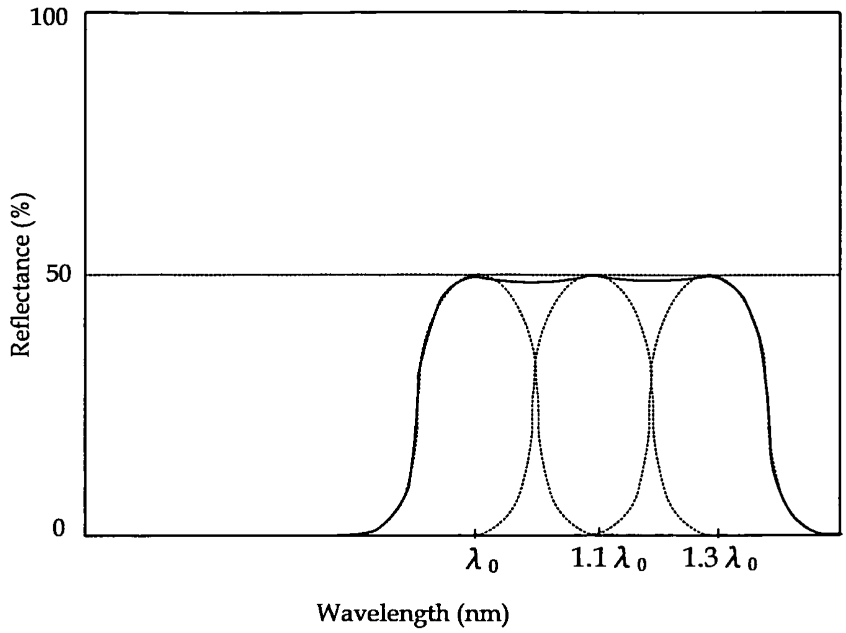
100
Reflectance (%)
50
0
λ0
1.1λ0
1.3λ0
Wavelength (nm)

FIG. 8

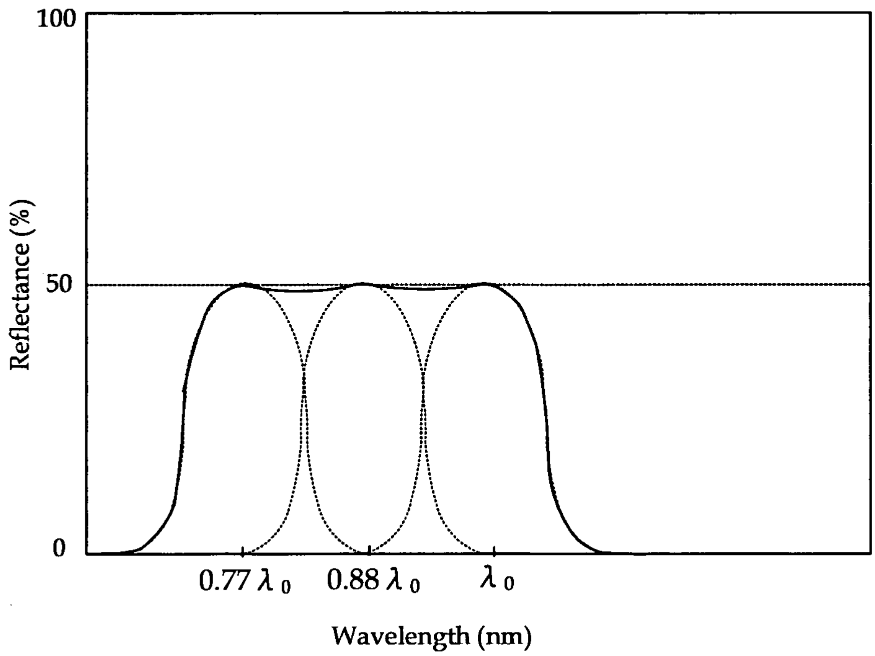
100
Reflectance (%)
50
0
0.77λ0
0.88λ0
λ0
Wavelength (nm)

FIG. 9

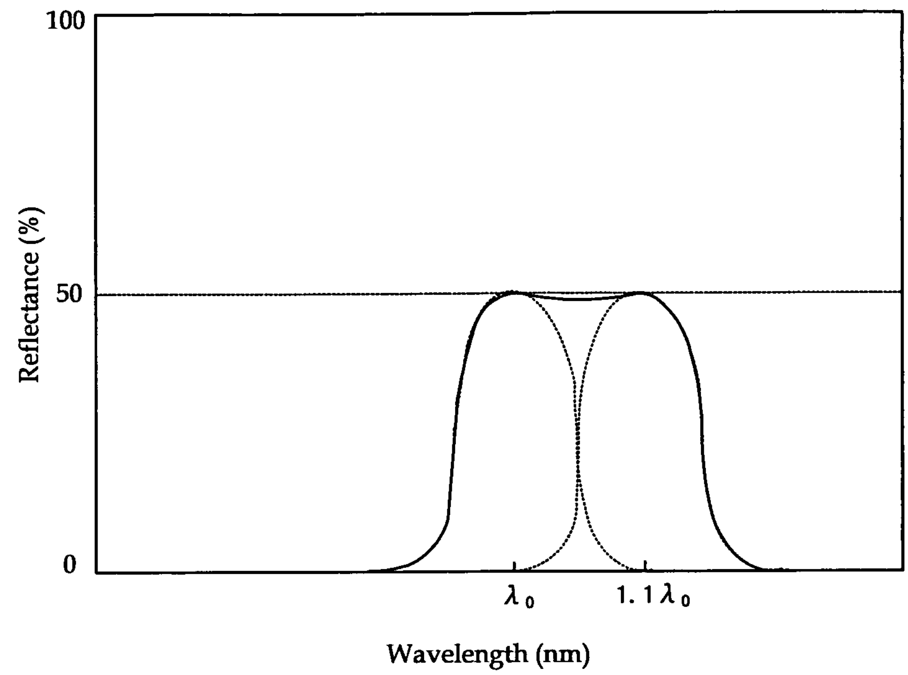
100
50
0
Reflectance (%)
$\lambda_0$
$1.1\lambda_0$
Wavelength (nm)

FIG. 10

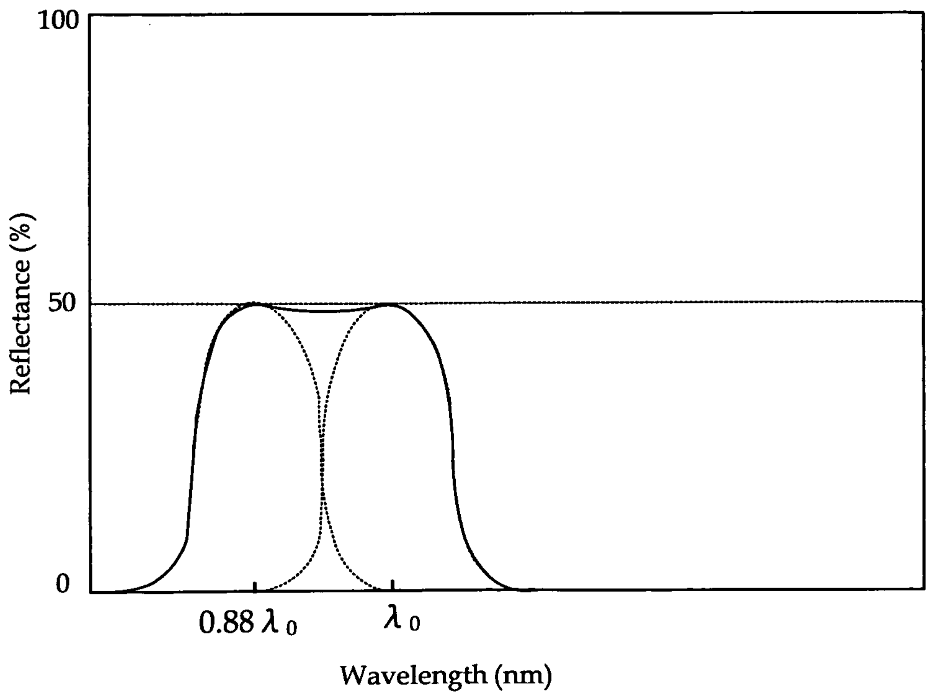
100
50
0
Reflectance (%)
$0.88\lambda_0$
$\lambda_0$
Wavelength (nm)

FIG. 11

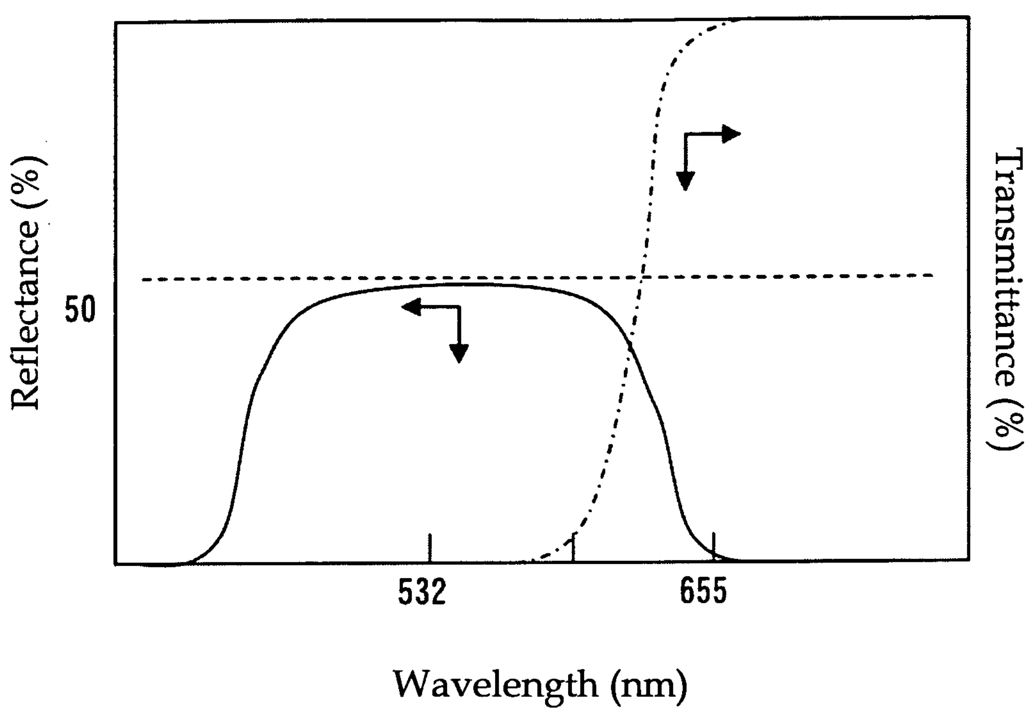

FIG. 12

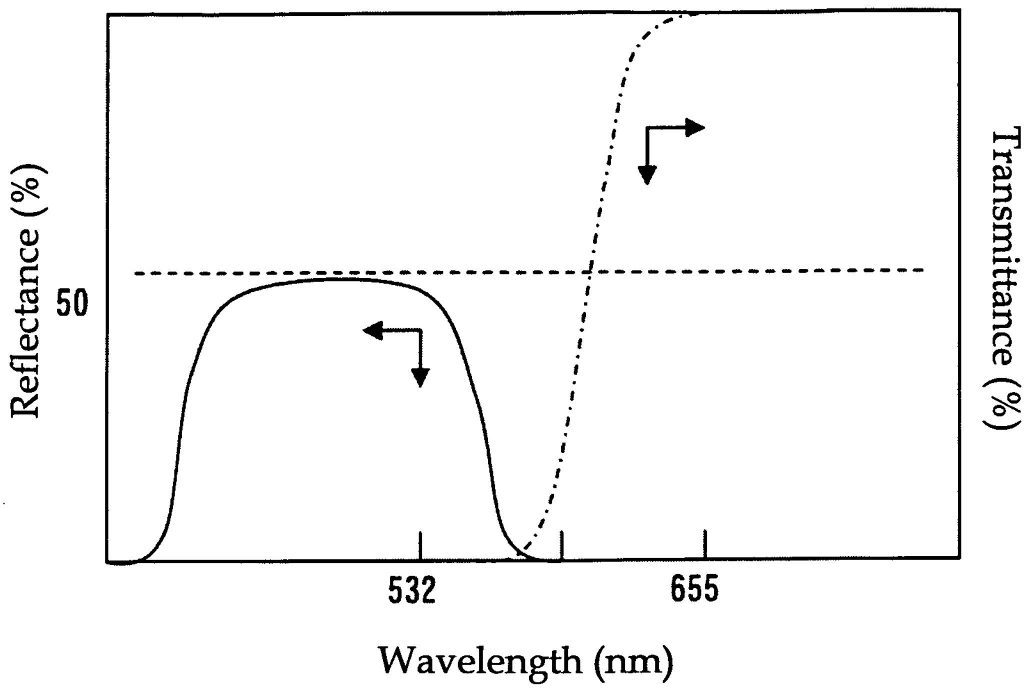

FIG. 13

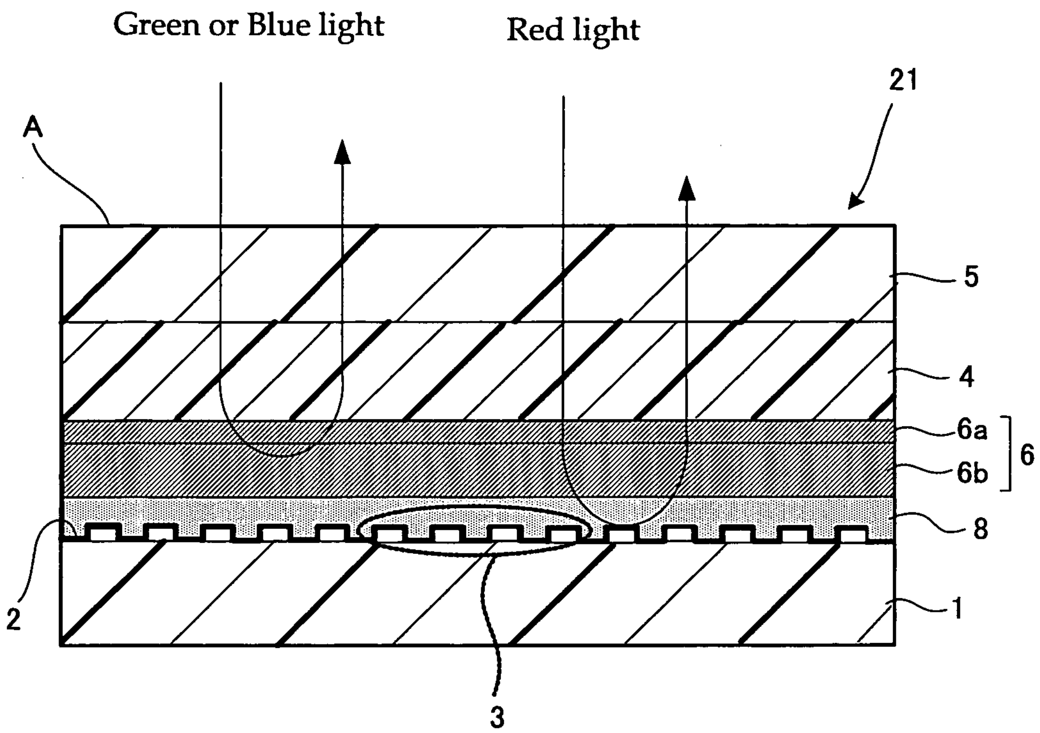

FIG. 14

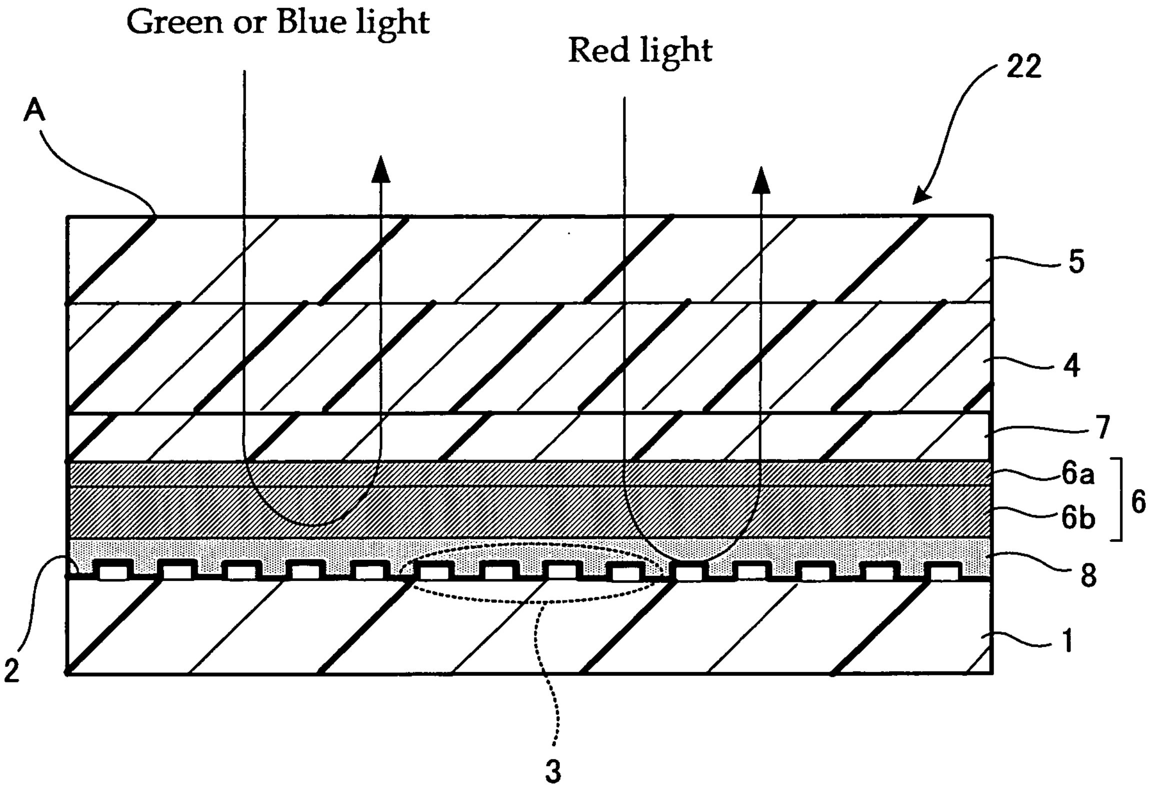

FIG. 15

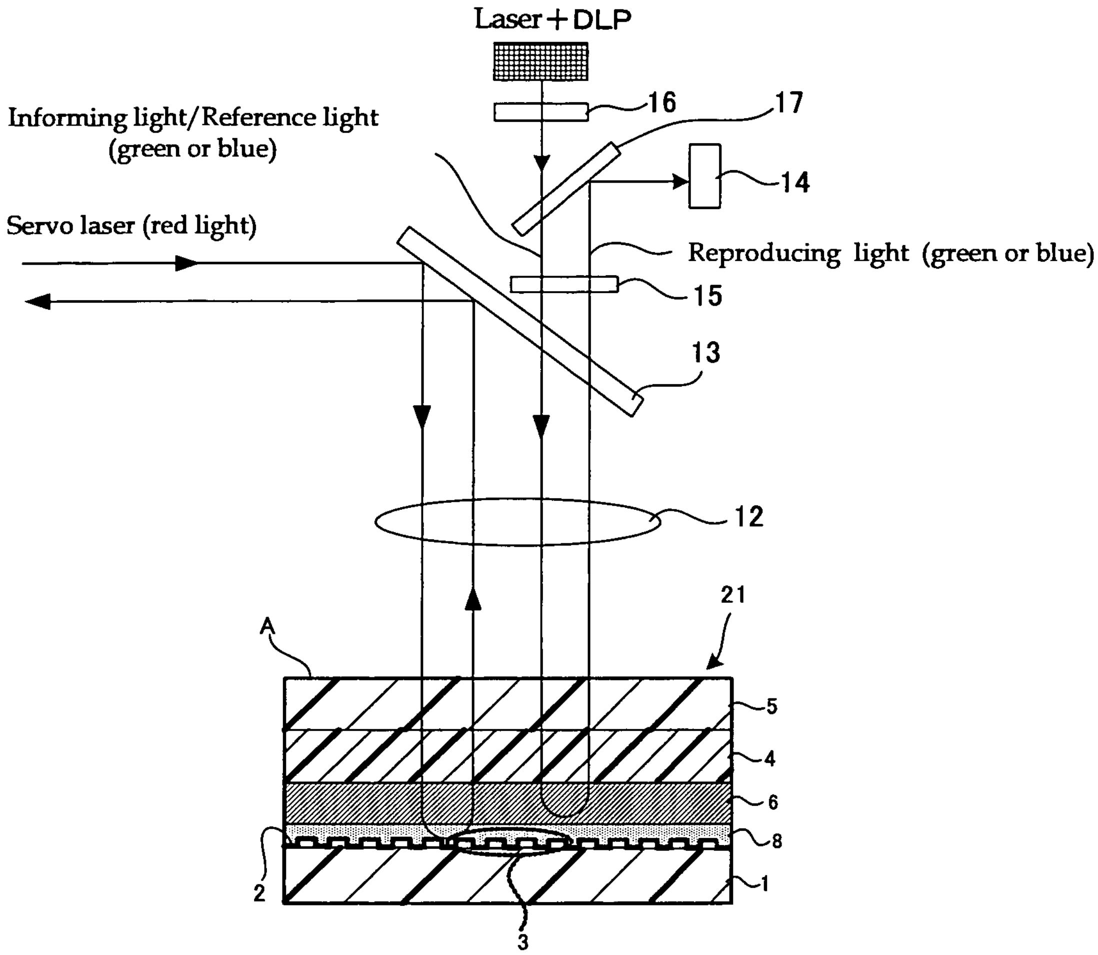
Laser + DLP
Informing light/Reference light (green or blue)
Servo laser (red light)
Reproducing light (green or blue)
16
17
14
15
13
12
21
A
5
4
6
8
2
1
3

FIG. 16

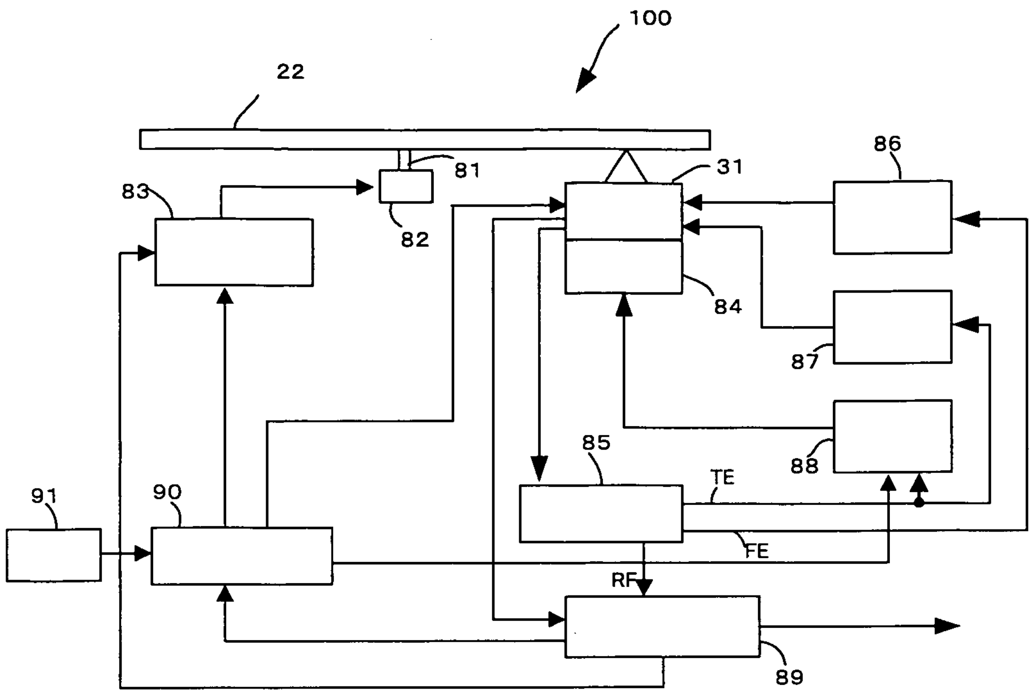

## INTERNATIONAL SEARCH REPORT

International application No.
PCT/JP2005/021483

A. CLASSIFICATION OF SUBJECT MATTER
***G11B7/24***(2006.01), ***G11B7/241***(2006.01), ***G11B7/257***(2006.01), ***G11B7/254***(2006.01), ***G11B7/258***(2006.01), ***G02B5/20***(2006.01), ***G02B5/26***(2006.01), ***G02B5/30***(2006.01), ***G03H1/02***(2006.01), ***G03H1/26***(2006.01), ***G11B7/0065***(2006.01)
According to International Patent Classification (IPC) or to both national classification and IPC

B. FIELDS SEARCHED
Minimum documentation searched (classification system followed by classification symbols)
G11B7/24, G11B7/241, G11B7/254, G11B7/257, G11B7/258, G11B7/0065, G02B5/20,G02B5/26, G02B5/30, G03H1/02, G03H1/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-265472 A (Optware Corp.), 24 September, 2004 (24.09.04), Claims 1 to 11; Par. Nos. [0001] to [0010], [0013] to [0018], [0026] to [0030]; Figs. 2, 4, 5 & WO 2004/070714 A1 | 1-46 |
| Y | JP 63-101869 A (Konishiroku Shashin Kogyo Kabushiki Kaisha), 06 May, 1988 (06.05.88), Page 4, upper right column, line 2 to lower left column, line 1; Figs. 1(b), 2(a), 2(b) (Family: none) | 1-46 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 February, 2006 (28.02.06) | 14 March, 2006 (14.03.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2005/021483

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-280953 A (Hitachi, Ltd.), 07 October, 2004 (07.10.04), Full text; all drawings (Family: none) | 1-46 |
| A | JP 2002-63738 A (TDK Corp.), 28 February, 2002 (28.02.02), Full text; all drawings (Family: none) | 1-46 |
| A | JP 2002-117585 A (TDK Corp.), 19 April, 2002 (19.04.02), Full text; all drawings & US 2002/0009045 A1 & EP 1162614 A2 | 1-46 |
| A | JP 61-248231 A (Ricoh Co., Ltd.), 05 November, 1986 (05.11.86), Full text; all drawings (Family: none) | 1-46 |
| A | JP 2001-83694 A (Fuji Photo Film Co., Ltd.), 30 March, 2001 (30.03.01), Full text; all drawings (Family: none) | 1-46 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002123949 A
- JP 11311936 A
- JP 2004265472 A
- JP 2002080851 A
- JP 2002179681 A
- JP 2002179682 A
- JP 2002338575 A
- JP 2002338668 A
- JP 2003306490 A
- JP 2003306491 A
- JP 2003313187 A
- JP 2003313292 A
- JP 2003313189 A
- JP 2002080478 A
- JP 2003313188 A
- JP 2002302487 A
- JP 2002179670 A
- JP 2002179669 A
- JP 47010537 A
- JP 58111942 A
- JP 58212844 A
- JP 59019945 A
- JP 59046646 A
- JP 59109055 A
- JP 63053544 A
- JP 3610466 B
- JP 4226187 B
- JP 48030492 B
- JP 48031255 B
- JP 48041572 B
- JP 48054965 B
- JP 50010726 B
- US 2719086 A
- US 3707375 A
- US 3754919 A
- US 4220711 A
- US 5759721 A
- US 4942112 A
- US 4959284 A
- US 6221536 B
- WO 9744714 A
- WO 9713183 A
- WO 9926112 A
- JP 2880342 B
- JP 2873126 B
- JP 2849021 B
- JP 3057082 B
- JP 3161230 B
- JP 2001316416 A
- JP 2000275859 A


### Non-patent literature cited in the description


- Photopolymer Handbook. Kogyo Chosakai Publishing Co, 1989
- Photopolymer Technology. The Nikkan Kogyo Shinbun, Ltd, 1989
- *SPIE manuscript,* 1997, vol. 3010, 354-372
- *SPIE manuscript,* 1998, vol. 3291, 89-103